# EUROPÄISCHE PATENTSCHRIFT

(11) **EP 2 420 669 B1**
(45) Veröffentlichungstag und Bekanntmachung des Hinweises auf die Patenterteilung: **30.03.2016**
(21) Anmeldenummer: 11006551.3
(22) Anmeldetag: 09.08.2011
(51) Int. Cl.: F03B 13/08, F03B 11/08

(54) **Schachtkraftwerk mit Schachtspülung**
Shaft power plant with shaft flushing
Centrale électrique à puits dotée d'un nettoyage de puits

(30) Priorität: 17.08.2010 DE 102010034576
(43) Veröffentlichungstag der Anmeldung: 22.02.2012
(73) Patentinhaber: Technische Universität München, 80333 München (DE)
(72) Erfinder: Rutschmann, Peter, Prof. Dr. sc. techn., 82031 Grünwald (DE); Barbier, Julien, 80805 München (DE); Geiger, Franz, 82431 Kochel (DE); Roenneberg, Sebastian, 80798 München (DE); Sepp, Albert, 82418 Riegsee/Hagen (DE); Spiller, Stephan, 82069 Hohenschäftlarn (DE)
(74) Vertreter: Hoefer & Partner Patentanwälte mbB

(56) Entgegenhaltungen:
- DE-A1- 19 904 642
- DE-B- 1 080 935
- DE-C- 213 922
- FR-A- 1 108 141
- FR-A- 1 165 735

## Beschreibung

Die Erfindung betrifft ein Schachtkraftwerk zur Stromerzeugung durch Energieumwandlungen eines Abflusses zwischen Oberwasser und Unterwasser. Die Erfindung offenbart hierzu ein deutlich vereinfachtes Einlaufkonzept für Wasserkraftanlagen an Staubauwerken, wobei alle wichtigen wasserbaulichen Anforderungen an Hydraulik, Verlandungen, Geschiebetransport, Hochwassertauglichkeit sowie die erforderlichen ökologischen Komponenten berücksichtigt werden.

Durch den notwendigen Klimaschutz, die kontinuierlich steigenden Preise auf dem Energiesektor sowie weitere Umwelteffekte gibt es in Deutschland und auch weltweit erstmals ernsthafte politische Bekenntnisse zu nachhaltigen Energiekonzepten. Aufgrund der positiven Entwicklung im Ausbau der erneuerbaren Energien wird vom Bundesministerium für Umwelt (BMU) im Erfahrungsbericht 2007 zum EEG als neues Ausbauziel die regenerative Stromdeckung von mindestens 27 % bis zum Jahr 2020 und mindestens 45 % bis zum Jahr 2030 angestrebt. Der BMU Bericht bemängelte allerdings auch, dass der Ausbau der Wasserkraft bisher deutlich hinter den Erwartungen zurückblieb. Ursachen für die Stagnation im inländischen Wasserkraftausbau waren einerseits die fehlenden wirtschaftlichen Anreize und andererseits die hohen ökologischen Anforderungen mit langwierigen und teuren Genehmigungsverfahren. Zusätzlich war und ist das Risiko einer Antragsablehnung in Kauf zu nehmen, da häufig Bewertungen naturschutzdominant ohne objektive Abwägung getroffen werden.

Dass durch das BMU überhaupt eine weitere Steigerung der Stromerzeugung durch die bei Umweltverbänden kritisierte Wasserkraft angestrebt wird, kann wohl auch darin begründet sein, dass diese Stromgewinnung durch viele umweltrelevante Eigenschaften - hoher Erntefaktor, externe CO₂-Kosten, ständige Verfügbarkeit, relativ günstige Erzeugungskosten - wieder Wertschätzung gefunden hat, was seit Januar 2009 auch durch erhöhte Vergütungssätze honoriert wird.

In Deutschland wird ein weiterer Ausbau der Wasserkraft durch die Vorgaben im Leitfaden für die Vergütung von Strom aus Wasserkraft vom BMU sowie durch die Europäische Wasserrahmenrichtlinie geregelt, wobei im Grundsatz nur noch für Standorte mit bestehenden Querbauwerken und gleichzeitiger ökologischer Verbesserung Genehmigungsaussicht besteht.

In den sohlgestützten Flusslandschaften kann auf die Sicherung des Grundwasserstandes nicht verzichtet werden, so dass ein örtlicher Gefällesprung auch unter ökologischen und wirtschaftlichen Gesichtspunkten - Rampenbauwerke sind teuer, bei Hochwasserabfluss hydraulisch ineffizient und haben eine schlechte CO₂-Bilanz - erhalten bleiben muss. Die schlechte CO₂-Bilanz von Rampenbauwerken begründet sich im Abbau und LKW Transport riesiger Mengen von Hartgestein. Hierdurch sind wesentliche Voraussetzungen einer Wasserkraftnutzung gegeben. Bei gleichzeitiger Herstellung einer Durchgängigkeit müssen auch die Vorgaben nach dem Leitfaden EEG des BMU erfüllt sein. Der Bau größerer bzw. großer Anlagen in Deutschland bleibt dadurch beschränkt oder wird erschwert bzw. verhindert.

Durch die geschaffenen Rahmenbedingungen (EEG-Vergütung, definierte Auflagen) ist das Interesse an neuen Wasserkraftanlagen trotz mäßiger Standortbedingungen deutlich gestiegen. Die Praxis zeigt allerdings häufig, dass mit konventioneller Kraftwerkstechnik die Wirtschaftlichkeit trotz besserer Vergütung insbesondere mit abnehmender Fallhöhe kaum gewährleistet werden kann und möglicherweise wiederum eine Stagnation auftreten dürfte. Will man jedoch auch bei weniger günstigen Voraussetzungen wegen der überzeugenden umweltpositiven Eigenschaften mehr Strom aus Wasserkraft erzeugen, sind neue technische Komponenten mit ökologischer Ausrichtung zur effizienteren Nutzung erforderlich.

Der Nutzen, auf diesem Sektor neue, praxistaugliche Entwicklungen voranzubringen wird zusätzlich verstärkt, weil effizientere Wasserkraftkonzepte weltweit eingebaut werden können.

Die Kleinwasserkraft bietet für Schwellen- und Entwicklungsländer besondere Vorteile, weil beispielsweise bei geringen Fallhöhen nur einfache bauliche Anforderungen an das Staubauwerk gestellt werden, keine Stauhaltungsdämme erforderlich sind und nur marginale Änderungen im Fließgewässer vorgenommen werden müssen. Da in der Regel die Stromerzeugung aus Laufwasserkräftanlägen zumindest mit Teillast weitgehend gewährleistet ist und gut prognostizierbar erfolgt, lässt sich eine wichtige Forderung zur Versorgungssicherheit auch bei dezentralen Siedlungsstrukturen im Inselbetrieb erfüllen.

Die Technik zur Stromerzeugung aus Wasserkraft ist bei größeren Anlagen im Grundsatz ausgereift, was durch die überaus hohen Gesamtwirkungsgrade von bis zu 90 % deutlich dokumentiert ist. Auch im Teillastbereich kann bei nahezu allen Turbinentypen eine hervorragende Umwandlung in elektrische Energie erfolgen.

Durch die Forderungen nach regenerativer Stromerzeugung wurden in den letzten Jahren auch auf dem Sektor der Klein- und Kleinstwasserkraft wieder verstärkt Forschungen durchgeführt. Neben Wirkungsgradsteigerungen und technologischen Verbesserungen bei Wasserrädern wurden auch einige neue Turbinentypen entwickelt, die teilweise die Belange des Fischabstieges und des Fischdurchganges berücksichtigen. Besonders erwähnenswert sind dabei die Techniken von Matrixturbinen und Wasserkraftschnecken. Beide Typen haben mittlerweile eine gewisse Marktreife erreicht.

Zusammenfassend kann man feststellen, dass in Nischensegmenten verbesserte Turbinentypen entwickelt wurden. Für die interessanten Standorte mit den definierten Randbedingungen nach dem Leitfaden des BMU ist jedoch nicht der Turbinentyp maßgebend, sondern die Effizienz des gesamten Anlagenkonzeptes, bei dem die besonderen wasserbaulichen Bedingungen von festen, meist verlandeten Wehranlagen zu berücksichtigen sind. Eine wesentliche Forderung besteht zusätzlich in der stromauf- und stromabwärts zu schaffenden Durchgängigkeit, wobei eine Fischschädigung durch Turbinen vermieden werden sollte.

Eine Wasserkraftnutzung für die in Deutschland relevanten Standorte erfolgt meist in der klassischen Form eines Buchtenkraftwerkes mit großem baulichen Aufwand und z. T. erheblichen Ufereingriffen. Dürfen keine Wasserstandserhöhungen vorgenommen werden, entstehen aufgrund der geringen Fließtiefen äußerst ungünstige Voraussetzungen für die Kraftwerksanströmung, die nur durch Tieferlegung der Einläufe mit sowohl technischen, betrieblichen als auch wirtschaftlichen Nachteilen, eingeschränkt umgangen werden können.

Da eine fast vertikale, tief angeordnete Rechenebene vorgegeben ist, muss auch bei Geschiebeführung eine großflächige Sohleintiefung vorgenommen werden, damit hydraulische Mindestanforderungen für die Strömungsverhältnisse gewährleistet werden können. Hierfür sind im oberen Zuströmbereich Vorbecken zur Geschiebeablagerung und Spülschleusen zur Geschiebeweitergabe anzuordnen. Das Einlaufbauwerk muss so gestaltet und dimensioniert werden, dass der natürliche, breit angelegte Fließquerschnitt möglichst verlustarm in den kompakten Buchtenquerschnitt umgelenkt wird. Durchgeführte Betriebsanalysen zeigen, dass bei funktionsfähigen Buchtenkraftwerken etwa 2/3 der Kosten für den baulichen Anteil veranschlagt werden müssen.

Nachteile vorbekannter Buchtenkraftwerke im Überblick: Großflächige Strömungsumlenkung, großflächiger Ufereingriff, großflächige Sohleintiefung, die durch eine Geschiebeschleuse gesichert werden muss, Geräuschemissionen, zum Teil negative Optik durch Kraftwerksgebäude und ökologische Beeinträchtigung der ehemaligen Flussstrecke zwischen Ein- und Ausleitung mit schwer realisierbarem Fischabstieg.

Die DE 10 80 935 B zeigt ein vorbekanntes Unterwasserkraftwerk. Dabei ist in einem Wasserführungsrohr eine Spülöffnung angeordnet. Weiteren relevanten Stand der Technik zeigen beispielsweise die Druckschriften DE 213922 C, DE 199 04 642 A1 oder FR 11 65 735 A.

Es ist Aufgabe der Erfindung ein Schachtkraftwerk und Schachkraftwerksmodul bereitzustellen, das bei kostengünstiger Herstellung effizient gereinigt und gewartet werden kann.

Die Aufgabe wird gelöst durch die Merkmale des unabhängigen Anspruchs. Die Unteransprüche haben vorteilhafte Weiterbildungen zum Gegenstand.

Insbesondere wird die Aufgabe gelöst durch ein Schachtkraftwerk gemäß Anspruch 1 zur Stromerzeugung durch Energieumwandlung eines Abflusses zwischen Oberwasser und Unterwasser, umfassend einen vertikalen Schacht, dessen Schachtkrone eine Einlaufebene bildet, welche unterhalb des Wasserstandes des Oberwassers verläuft, wobei der Schacht nach oben offen ist und an seinem unteren Ende mit einem Boden verschlossen ist, einer Einheit aus einer Turbine und einer elektrischen Maschine, wobei die Einheit komplett unter Wasser im Schacht angeordnet ist, und wobei die Turbine zum vertikalen oder geneigten oder horizontalen Wasserdurchlauf angeordnet ist, und einen an die Turbine angeschlossenen Ablauf, welcher einen geschlossenen Strömungskanal darstellt und durch einen Durchlass im Schacht zum Unterwasser führt. Darüber hinaus umfasst das erfindungsgemäße Schachtkraftwerk zumindest eine verschließbare Schachtspülöffnung im Schacht auf einer turbinenzugewandten Seite eines Rechens, wobei die Schachtspülöffnung unter Umgehung der Turbine zum Unterwasser führt. Durch die Rechenstäbe hindurch wird insbesondere Feinkies in den Schacht befördert. Bei extremer Geschiebeführung können Ablagerungen im Schacht entstehen, die hydraulisch gespült werden sollen. Hierfür ist die erfindungsgemäße Schachtspülöffnung vorgesehen. Zum Spülen wird die Schachtspülöffnung geöffnet, wodurch die hydraulische Spülung des Schachtinnenraums ins Unterwasser erfolgt. Die Schachtspülöffnung kann neben der Spülfunktion zusätzlich bevorzugt als Grundablass dienen. Somit kann der Schacht zum Beispiel für den Revisionsfall vollständig entleert werden.

In bevorzugter Ausführung umfasst das Schachtkraftwerk eine Feststoffsaugpumpe und/oder eine Vorrichtung zum Einsetzen einer Feststoffsaugpumpe. Somit kann auch bei Vollverlandung der Schacht gereinigt werden.

In vorteilhafter Ausbildung ist vorgesehen, dass die Schachtspülöffnung mittels eines Schachtspülverschlusses verschließbar ist. Besonders bevorzugt ist hierzu ein Schieber vorgesehen. Der Schieber ist entweder mittels Handbetrieb oder elektrisch oder hydraulisch verfahrbar. Alternativ dazu ist bevorzugt der Schachtspülverschluss als an- und abschraubbarer Deckel ausgeführt.

Erfindungsgemäß ist die Schachtspülöffnung in einer Seitenwandung des Schachtes angeordnet. Besonders bevorzugt befindet sich die Schachtspülöffnung an derjenigen Seitenwand, welche dem Unterwasser zugeordnet ist. Diese Seitenwandung kann entweder selbst das Staubauwerk bilden oder ist an dem Staubauwerk angebracht. Für die zweite Variante ist die Schachtspülöffnung sowohl in der Seitenwandung als auch im Staubauwerk auszuführen. Besonders bevorzugt schließt sich die Schachtspülöffnung bündig an den Boden des Schachtes an.

In einer weiteren bevorzugten Ausbildung ist die seitliche Schachtspülöffnung so groß ausgeführt, dass sie als Revisionszugang zum Schacht genutzt werden kann. Besonders bevorzugt ist es, hierzu die Schachtspülöffnung über dem mittleren Unterwasserstand anzuordnen. In bevorzugter Ausbildung ist der Durchmesser der Schachtspülöffnung größer 30 cm, insbesondere größer 50 cm.

Alternativ zur Anordnung der Schachtspülöffnung in der Seitenwandung, ist es erfindungsgemäß vorgesehen, dass die Schachtspülöffnung im Boden des Schachtes angeordnet ist. Hier können insbesondere mehrere kleine Schachtspülöffnungen vorgesehen sein. In vorteilhafter Ausbildung laufen von der Schachtspülöffnung im Boden Rohrverbindungen entweder direkt zum Unterwasser oder zum Ablauf der Turbine.

Um Effizienzsteigerungen erfüllen zu können ist eine grundlegende Änderung des Anlagenkonzeptes erforderlich. Die nachfolgend dargestellte Erfindung berücksichtigt bevorzugt ein Schachtkraftwerk/Schachkraftwerksmodul mit einer Änderung von der vertikalen zur horizontalen Einlaufebene mittels eines vertikalen Schachtes, woraus sich erhebliche hydraulische, ökologische und wirtschaftliche Vorteile ableiten lassen. Die Erfindung kommt insbesondere an Unterwasser-Wasserkraftkonzepten bevorzugt an Staubauwerken zum Einsatz. Wobei unter Staubauwerken insbesondere Flusssperren, Talsperren, Wildbachsperren, Staumauern, Wehranlagen, historische sowie denkmalgeschützte Wehranlagen, Querbauwerke, Schifffahrtsschleusen, staugeregelte Anlagen und/oder Stauhaltungen an fließenden oder stehenden Gewässern zu verstehen sind. Ferner umfasst hier der Begriff Staubauwerk eine natürliche Barriere zwischen einem Oberwasser und einem Unterwasser. Alle wichtigen wasserbaulichen Anforderungen an Hydraulik, Verlandungen, Geschiebetransport, Hochwassertauglichkeit sowie die erforderlichen ökologischen Komponenten werden erfindungsgemäß berücksichtigt.

Besonders bevorzugt ist das erfindungsgemäße Schachtkraftwerk wie folgt ausgebildet. Das Schachtkraftwerk dient zur Stromerzeugung durch Energieumwandlung eines Abflusses zwischen Oberwasser und Unterwasser. Das Schachtkraftwerk umfasst einen vertikalen Schacht, dessen Schachtkrone eine sohlparallele Einlaufebene bildet, welche unterhalb des Wasserstandes des Oberwassers verläuft, wobei der Schacht nach oben offen ist und an seinem unteren Ende mit einem Boden verschlossen ist, eine Einheit aus einer Turbine und einer elektrischen Maschine, wobei die Einheit komplett unter Wasser im Schacht angeordnet ist, und wobei die Turbine zum vertikalen oder horizontalen Wasserdurchlauf angeordnet ist, und einen an die Turbine angeschlossenen Ablauf, welcher einen geschlossenen Strömungskanal darstellt und durch einen Durchlass im Schacht zum Unterwasser führt.

Für die Variante des vertikalen Wasserdurchlaufs ist in einer horizontalen Ebene eines Turbinenlaufrades der Turbine eine erste Querschnittsfläche des Schachts wesentlich größer als eine durch das Turbinenlaufrad beanspruchte, zweite Querschnittsfläche. Die erste und die zweite Querschnittsfläche verlaufen beide horizontal in derselben Ebene. Die erste Querschnittsfläche wird unter Vernachlässigung der Einheit aus Turbine und elektrischer Maschine gemessen. D.h., die erste Querschnittsfläche ist z.B. bei einem rechteckigen Schacht das Produkt aus den zwei lichten Seitenlängen des Schachts. Die zweite Querschnittsfläche entspricht einem Strömungsquerschnitt im Turbinenkanal und wird z.B. durch das Produkt aus halbem Turbinenlaufraddurchmesser im Quadrat und Pi angegeben. In bevorzugter Ausgestaltung ist vorgesehen, dass die erste Querschnittsfläche um zumindest Faktor 1,5, insbesondere 5, insbesondere 10, insbesondere 30 größer ist als die zweite Querschnittsfläche.

Bei der Variante des horizontalen Wasserdurchlaufs ist eine horizontale erste Querschnittsfläche des Schachts wesentlich größer als eine durch das Turbinenlaufrad beanspruchte, vertikale zweite Querschnittsfläche.

Bevorzugt kann die Turbine auch schräg angeordnet werden, d. h., die Turbinenachse weist einen beliebigen Winkel zwischen der Horizontalen und der Vertikalen auf. Bevorzugt wird eine Abweichung des Winkels der Turbinenachse gegenüber der Horizontalen bis +/- 40°, insbesondere bis +/- 25°, insbesondere bis +/- 15°, als Anordnung mit "horizontalem Wasserdurchlauf" definiert. Ferner bevorzugt wird eine Abweichung des Winkels der Turbinenachse gegenüber der Vertikalen bis +/- 40°, insbesondere bis +/- 25°, insbesondere bis +/- 15°, als Anordnung mit "vertikalem Wasserdurchlauf' definiert.

Die Anordnung mit horizontaler Turbinenanordnung eignet sich insbesondere für sehr geringe Fallhöhen. Wobei hier durchaus bevorzugt ein Wasserstand des Unterwassers auf Höhe der Oberwassersohlebene liegen kann. Ferner kann bei kleinen Fallhöhen Bautiefe gespart werden, was erhebliche Kostenvorteile bringt. Bevorzugt ist die erste Querschnittsfläche auf Höhe einer Turbinenachse der Turbine oder auf Höhe der Schachtkrone definiert. Liegt die erste Querschnittsfläche auf Höhe der Turbinenachse, wird sie unter Vernachlässigung der Einheit aus Turbine und elektrischer Maschine gemessen. Liegt die erste Querschnittsfläche auf Höhe der Schachtkrone, wird sie unter Vernachlässigung etwaiger Rechenanordnungen gemessen. D.h. die erste Querschnittsfläche ist z.B. bei einem rechteckigen Schacht das Produkt aus den zwei lichten Seitenlängen des Schachts, wobei bei vertikalen Schachtwänden die erste Querschnittsfläche an der Turbinenachse und an der Schachtkrone gleich ist. Die zweite Querschnittsfläche entspricht einem Strömungsquerschnitt im Turbinenkanal und wird z.B. durch das Produkt aus halbem Turbinenlaufraddurchmesser im Quadrat und Pi angegeben. In bevorzugter Ausgestaltung ist vorgesehen, dass die erste Querschnittsfläche um zumindest Faktor 1,5, insbesondere 5, insbesondere 10, insbesondere 30 größer ist als die zweite Querschnittsfläche.

Die Definition "sohlparallele Einlaufebene" beinhaltet auch eine leicht, insbesondere bis +/- 20°, insbesondere bis +/- 10°, insbesondere bis +/- 5°, gegen die Sohlebene geneigte Einlaufebene. Insbesondere bei Wildbachsperren kann die Sohlebene von der Horizontalen abweichen.

Die Einheit ist charakterisiert durch eine kompakte Bauweise, bevorzugt mit einem Permanentmagnet-Synchrongenerator mit variabler Drehzahl und/oder einer direkten Kopplung von Turbine und elektrischer Maschine und/oder einem nahezu wartungsfreien Unterwasserbetrieb. Bedingt durch diese Eigenheiten entfällt ein Krafthausgebäude und lediglich die Elektronik muss in einem Container oder Gebäude außerhalb des Wassers aufgestellt werden. Durch die spezifische Bauweise der vertikal oder horizontal durchströmten Turbine kann eine grundlegende Änderung der Einlaufebene und Rechenebene vorgenommen werden.

Das erfindungsgemäße Schachtkraftwerk ermöglicht kostengünstigere Wasserkraftnutzung an Fließgewässern mit Querbauwerken zur Erzeugung unterschiedlicher Energieniveaus im Wasserkörper. Typische Beispiele solcher Einsatzorte sind u.a. bestehende Querbauwerke und historische Wehre. Das Konzept kann ferner auch an anderen Orten zum Einsatz gelangen, z.B. bei Wildbachsperren oder bei verlandeten oder verlandungsgefährdeten Mitteldruckanlagen aber auch in Stauseen und Staubecken.

Das Potential an solchen Standorten ist auch in Deutschland vorhanden und kann wegen der optischen Vorteile und der geringen Baukosten wirtschaftlich umgesetzt werden. Infolge der einfachen Anordnung, der Robustheit und geringen Wartungsanfälligkeit, des relativ geringen Bauaufwandes und der Möglichkeit, in Modulbauweise mit vorgefertigten Elementen zu arbeiten, ist ein Einsatz außerhalb Deutschlands und Europas, weltweit insbesondere auch in Entwicklungsländern, möglich.

Mit dem Konzept des Schachteinlaufes lässt sich aufgrund der Horizontalanordnung der häufig geforderte Quotient Q_{Turbine}/A_{Rechenfläche} < 0,5 m/s deutlich einfacher und kostengünstiger realisieren, weil der Schachtquerschnitt nur zweidimensional vergrößert werden muss und außerdem keine Uferflächen beansprucht werden. Vorbekannte Buchtenkraftwerke erreichen oft nur Q/A = 1m/s. Q ist der Abfluss in der Turbine in m³/s. A bezeichnet die Schachtquerschnittsfläche in der Rechenebene in m². Die Schachtquerschnittsfläche in der Rechenebene muss zur Beachtung des Fischschutzes so groß gewählt werden, dass die Fische die Barriere wahrnehmen und reagieren können sowie aufgrund ihres Leistungsvermögens entfliehen können und ihre physischen Fähigkeiten zum Entkommen nicht überstiegen werden, d.h. im Extremfall ist Q_{Turbine}/A_{Rechenfläche} < 0,3 m/s zu bevorzugen.

Weiter bevorzugt ist es, dass die Schachtkrone bzw. die Einlaufebene in der unteren Hälfte, insbesondere im unteren Drittel, einer Wassertiefe des Oberwassers verläuft. Vorteilhafterweise ist der Schacht über seine komplette Oberseite, mit Ausnahme von etwaigen Rechen, offen. Ferner von Vorteil ist, dass alle Seitenwände des Schachts vertikal verlaufen, so dass die erste Querschnittsfläche über die gesamte Schachthöhe konstant ist. Dadurch wird jede Einengung der Anströmung verhindert und der Schacht kann sehr einfach hergestellt werden. Der Begriff "vertikale Seitenwände" beinhaltet auch eine leichte, insbesondere bis +/- 20°, insbesondere bis +/- 10°, insbesondere bis +/- 5°, Neigung gegen den Schachtboden. Ferner bevorzugt ist es, den Schacht mit strömungsgünstig verlaufenden Leitwänden auszugestalten.

In bevorzugter Ausgestaltung ist die Turbine, insbesondere das Turbinenlaufrad, unterhalb der Sohlebene des Oberwassers angeordnet und/oder in der unteren Hälfte, insbesondere im unteren Drittel, des Schachts angeordnet. Turbine und elektrische Maschine sind bevorzugt klar unterhalb der Schachtkrone angeordnet. Bei Hochwasserführung kann Geschiebe in den Schacht eindringen, durch den abgesenkten Verschluss wird das Geschiebe über den Schacht gespült, d.h. die Höhe des Schachts in Bezug auf die Flusssohle bzw. die Lage des Turbinenrades unterhalb der Geschiebe rückhaltenden Einlaufkante sind wichtig.

Von Vorteil ist, wenn die Turbinenachse (Rotationsachse) des Turbinenlaufrades und eine Ankerachse der elektrischen Maschine koaxial zueinander und, je nach Ausführungsvariante, vertikal oder horizontal angeordnet sind. Des Weiteren ist bevorzugt vorgesehen, dass sich der Ablauf direkt im Anschluss an die Turbine, insbesondere stetig, aufweitet. Bei der Variante mit vertikalem Wasserdurchlauf ist es besonders bevorzugt, dass der gekrümmte Ablauf nach der Turbine in folgender Reihenfolge einen sich aufweitenden Konus, einen Krümmer und ein Saugrohr oder einen Saugschlauch umfasst. Der Krümmer dient bevorzugt zur Umlenkung der Strömung in die Horizontale oder beinahe Horizontale. Bevorzugt lenkt der Krümmer um 80° bis 100°, insbesondere um 85° bis 95°, insbesondere um 90° um.

Bei der Variante mit horizontalem Wasserdurchlauf ist es besonders bevorzugt, dass der Ablauf nach der Turbine in folgender Reihenfolge einen sich aufweitenden Konus und ein Saugrohr oder einen Saugschlauch umfasst. Bevorzugt erstreckt sich dabei der Ablauf durch eine Seitenwand des Schachts hindurch zum Unterwasser. Die Einheit ist bevorzugt direkt an die Schachtwand montiert.

Das Saugrohr bzw. der Saugschlauch sind bevorzugt als Diffusor zur Rückgewinnung der Geschwindigkeitsenergie ausgebildet.

Bevorzugt ist der Boden des Schachts unterhalb der Sohlebene des Oberwasser angeordnet. Der Schacht erstreckt sich somit bis unterhalb der Sohlebene des Oberwassers.

Bevorzugt ist für den vertikalen Wasserdurchlauf der gekrümmte Ablauf, insbesondere ausgeführt als Rohrleitung, über dem Turbinenlaufrad angeordnet, so dass bei Stromerzeugung das Wasser das Turbinenlaufrad von unten nach oben durchströmt. Dabei ist es vorteilhaft, wenn sich der gekrümmte Ablauf durch eine Seitenwand des Schachts hindurch zum Unterwasser erstreckt. Durch diese Anordnung kann man sich bei kleinen Fallhöhen Bautiefe sparen was erheblich Kostenvorteile bringt.

Alternativ bevorzugt für den vertikalen Wasserdurchlauf ist, dass der Ablauf, insbesondere gekrümmt, unter dem Turbinenlaufrad angeordnet ist, so dass bei Stromerzeugung das Wasser das Turbinenlaufrad von oben nach unten durchströmt. Dabei erstreckt sich bevorzugt der gekrümmte Ablauf durch den Boden des Schachts hindurch zum Unterwasser. Ferner vorteilhaft ist hier, dass der Schacht unterhalb des Bodens zu einem Hohlraum ausgebildet ist, wobei der Boden des Schachts eine Decke des Hohlraums bildet, und wobei sich der gekrümmte Ablauf durch die Decke, den Hohlraum und eine Seitenwand des Hohlraums bis zum Unterwasser erstreckt. Der Hohlraum wird bevorzugt mit Ballast gefüllt, um die Auftriebssicherheit zu gewährleisten.

In weiterer vorteilhafter Ausgestaltung, sowohl für den vertikalen als auch horizontalen Wasserdurchlauf, wird der Einlauf in den Schacht mit einer horizontalen Rechenebene, welche der horizontalen Einlaufebene entspricht, oder einer vertikalen Rechenebene mit insbesondere einer horizontalen Abdeckung über dem Schacht versehen. Bevorzugt werden ein vorgelagerter Grobrechen und ein nachgelagerter Feinrechen verwendet. Der Feinrechen ist bevorzugt mit einem Gitterabstand < 20 mm ausgeführt. Bevorzugt haben beide Rechen drehbare Rechenstäbe und/oder eine maschinelle Abdeckung, z.B. Rollabdeckung, sowie eine Rechenreinigungsvorrichtung unter Wasser.

Bevorzugt umfasst das Schachtkraftwerk ein Staubauwerk zwischen Oberwasser und Unterwasser. Wobei unter Staubauwerken insbesondere Flusssperren, Talsperren, Wildbachsperren, Staumauern, Wehranlagen, historische sowie denkmalgeschützte Wehranlagen, Querbauwerke, Schifffahrtsschleusen, staugeregelte Anlagen und/oder Stauhaltungen an fließenden oder stehenden Gewässern zu verstehen sind. Ferner umfasst hier der Begriff Staubauwerk eine natürliche Barriere zwischen einem Oberwasser und einem Unterwasser.

Bevorzugt ist im Staubauwerk, insbesondere über die gesamte Einlaufbreite, eine permanent überströmter Verschluss angeordnet. Bevorzugt ist der Schacht mit einem vieleckförmigen oder halbkreisförmigen Querschnitt ausgebildet, wobei eine Längsseite direkt am Staubauwerk anliegt. Ferner bevorzugt ist eine Klappe vorgesehen, welche zum Erweitern der Überströmung und zum gleichzeitigen Öffnen einer Unterströmung um eine horizontale Achse schwenkbar ist. Alternativ zur schwenkbaren Klappe ist eine Drehklappe bevorzugt, wobei die Drehklappe an ihrer Unterkante einen integrierten Verschluss umfasst, welcher eine Regulierung der Unterströmung unabhängig von der Überströmung zulässt.

Der Oberwasserstand wird bis zum Turbinenausbauabfluss durch die Schaufelstellung des bevorzugten Leitapparates und die Turbinenlaufraddrehzahl reguliert. Durch die kompakte Bauwerksform mit der erzwungenen Vertikalumlenkung des Triebwassers entsteht beim Übergang vom Freispiegel- zum Druckabfluss eine ausgeprägte Wirbelbildung. Wie der Versuch am physikalischen Modell zeigte, unterbindet bereits eine relativ geringe, breitflächige Klappenüberströmung eine Rotationsströmung mit lufteinziehender Wirbelbildung.

Durch den stirnseitig angeordneten Verschluss werden vier wesentliche Effekte erzielt: Unterbindung der Wirbelbildung im Einlauf durch Permanentüberströmung mit gleichzeitiger Sauerstoffregulierung, wobei sowohl Sauerstoffeintrag als auch Sauerstoffaustrag bei Übersättigung reguliert werden kann. Breitflächige und direkte Oberflächenabströmung ins Unterwasser. Aale, die sich bodennah bewegen und nur an wenigen Tagen im Herbst abwärts wandern, könnten durch temporäres Öffnen des integrierten sohlbündigen Reinigungsverschlusses bzw. bei Einbau einer Schwenkklappe durch eine Drehstellung schadlos ins Unterwasser befördert werden. Abführung von Treibholz und Geschwemmsel über den Verschluss sowie Abführung des Rechengutes unter dem Verschluss. Sowie gegebenenfalls Steuerung des Oberwasserstandes.

Durch die Permanentüberströmung des Verschlusses entwickelt sich im gesamten Einlaufbereich eine oberflächennahe Fließlamelle wodurch besonders abwanderungswillige Fische, insbesondere Jungfische deren Lebensraum vorwiegend an der Oberfläche ist, schadlos absteigen können.

Um die bevorzugten Anforderungen zu erfüllen, muss eine Drehklappe mit einem tief liegenden integrierten Verschluss ausgestattet werden. Die alternative Schwenkklappe hat eine mittig angeordnete Drehachse, wodurch eine Drehbewegung im Uhrzeigersinn gleichzeitig die Unter- bzw. Überströmung gewährleistet bzw. erhöht. Um bei Hochwasserabführung den vollen Flächenquerschnitt freigeben zu können und keine Verklausungsgefahr zu provozieren, wird bevorzugt eine Technik verwendet die eine Entkoppelung der mittigen Drehachse und ein Einkoppeln einer Achse am Klappenfußpunkt ermöglicht.

Bevorzugt ist eine Unterkante der Klappe auf Höhe der Schachtkrone angeordnet.

Alternativ dazu ist es von Vorteil, dass um den Schacht eine tiefer als die Schachtkrone und tiefer als die Sohlebene des Oberwassers liegende Spülrinne verläuft, wobei die Spülrinne bis zur Klappe führt, und die Unterkante der Klappe auf Höhe der Spülrinne angeordnet ist. Die Klappe ist bevorzugt mit einer Reguliervorrichtung versehen, die geeignet ist, einen geschiebeaustragenden Spülschwall zu erzeugen.

Geschiebeführung erfolgt bei größeren Wasserführungen wobei sehr häufig bei festen Wehranlagen eine völlige Verlandung bis zur Wehrkrone eintreten kann.

Durch die relativ geringe Überdeckung ist das erfindungsgemäße Verschlussspülsystem wirksam. Bei konventionellen Anlagen benötigt man wegen der Tiefenentwicklung aufwändige und großflächige Spülbauwerke. Durch den Feinrechen wird Grobgeschiebeeintrag verhindert, Sande sind für die Turbine im Niederdruckbereich praktisch unschädlich.

Geschiebetransport und Treibholzanfall erfolgt normalerweise bei Hochwasserführung. Um entsprechende betriebliche Einschränkungen zu vermeiden, können die Rechenstäbe bevorzugt drehbar ausgestattet werden (Nutzung als Verschlussebene) um Geschiebe- und Schwimmstoffeintrag in den Schacht zu verhindern. Zugleich wird bei höherer Wasserführung der Klappenverschluss mit dem Effekt gelegt, dass sich über der Rechenebene eine Absenkungskurve bildet und dadurch ausreichend große Schleppkräfte erzeugt werden, um den Einlaufbereich geschiebefrei zu halten. Die Schacht- und Verschlussdimensionierung ist für die geforderte vollflächige Spülwirkung vorzunehmen.

Bei konventionellen Einläufen können stromabwärts wandernde Fische bei hohen Fließgeschwindigkeiten an den Einlaufrechen gedrückt werden oder geraten in die Turbinen von Wasserkraftanlagen und sind dadurch verletzungsgefährdet. Mit den bisher realisierten, technischen Abhilfemaßnahmen konnten allenfalls Teilerfolge erzielt werden. So sind Bypass-Systeme für den Fischabstieg oft wirkungslos und konstruktive Turbinenlösungen (Laufradgeometrie, Drehzahl) mit deutlichen Wirkungsgradeinbußen verbunden, wobei die Frage der tatsächlichen Schädigungsreduktion offen bleibt. Erfindungsgemäß ist ein deutlicher Schädigungsrückgang im Fischbestand möglich durch Schaffung sicherer Abwanderungskorridore in das Unterwasser und Absenkung der Anströmgeschwindigkeiten in der Rechenebene auf bevorzugt vₘ < 0,5 m/s. Um alleine die Forderungen nach niedrigen Anströmgeschwindigkeiten zu erfüllen, müssten bei konventionellen Kraftwerkseinläufen mit vertikaler Ebene die Bauwerke erheblich vergrößert werden, da die bisherigen Bemessungen mit v_{m Rechen} ≤ 1,0 m/s vorgenommen wurden.

Mit dem Konzept des erfindungsgemäßen Schachteinlaufes lässt sich aufgrund der Horizontalanordnung die geforderte große Rechenfläche mit moderaten Fließgeschwindigkeiten ohne aufwändige Rampenbauwerke erzeugen. Die zweite Forderung nach funktionsfähigen Abwanderungskorridoren bleibt bei klassischen Kraftwerksanlagen weitgehend unerfüllt. Mit dem erfindungsgemäßen Schachtkonzept bietet sich aufgrund der Verschlussanordnung mit der hydraulisch notwendigen Permanentüberströmung die Möglichkeit, durch bevorzugte dreiecks- oder halbkreisförmige Einkerbung im Kronenbereich des Verschlusses die direkte Abströmung so zu ertüchtigen, dass sie von abwanderungswilligen Fischen benutzt wird. Aale, die sich bodennah bewegen und nur an wenigen Tagen im Herbst abwärts wandern, könnten durch temporäres Öffnen des integrierten sohlbündigen Reinigungsverschlusses an der Unterkante des Stauverschlusses schadlos ins Unterwasser befördert werden. Die vorgeschlagenen Fischabstiegstechniken sind deshalb erfolgversprechend, weil neben den geringen Fließgeschwindigkeiten in der Feinrechenebene ein kurzer und direkter Weg zur breitflächigen Verschlussüber- bzw. -unterströmung vorhanden ist. Es ist sowohl ein kontinuierlicher als auch ein (sensor-)gesteuerter Betrieb bevorzugt, bei dem die Zeiträume des Fischabstieges besonders berücksichtigt werden könnten.

Durch die bevorzugte direkte Positionierung des erfindungsgemäßen Schachtes am Wehrkörper bzw. Staubauwerk sowie der vollständigen Unterwasseranordnung werden weitere positive Effekte erzielt: Vollständig unsichtbare Kraftwerksbauten, Beibehaltung des Wasserweges im Flussbett ohne gravierende Strömungsumlenkungen und Beeinträchtigung der Öko-Fauna und Öko-Flora, keine Totzonenbildung im Unterwasser, und Vermeidung von Geräuschemissionen durch die komplette Unterwasseranordnung.

Ferner bevorzugt sind verstellbare Rechenstäbe als Verschlusseinrichtung und/oder andere motorisierte Abdeckungen und/oder Unterwasserrechenreiniger und/oder ein für die Weitergabe des Rechengutes notwendiger integrierter Verschlussteil an der Unterkante des Stauverschlusses.

Bei der Variante mit vertikalem Wasserdurchlauf ist bevorzugt der nach oben gerichtete Ablauf bei Niederdruckanlagen anzuwenden, um Bautiefe einzusparen. Weiter bevorzugt kommt die Erfindung auch bei Mitteldruckanlagen zum Einsatz, wobei hier der Schacht dazu verwendet werden kann, die Verlandung des Turbineneinlaufs zu verhindern. Rechenausführung, Rechenanordnung und Spülverschluss spielen insbesondere bei Niederdruckanlagen eine wichtige Rolle.

Alternativ zur versenkten Anordnung des Schachtes in der Sohle ist bevorzugt vorgesehen, dass der Boden des Schachts oberhalb der Sohlebene des Oberwassers angeordnet ist. Bevorzugt ist der Schacht hierzu gegen die Sohle abgestützt und/oder am Staubauwerk befestigt, insbesondere eingehängt, und/oder stehend auf einem Fortsatz des Staubauwerks angeordnet. Besonders bevorzugt umfasst der Ablauf einen zylindrischen Durchlauf mit konstantem Querschnitt, insbesondere ausgeführt als Bohrung, durch das Staubauwerk. An den zylindrischen Anteil schließt sich bevorzugt eine Querschnittsaufweitung, insbesondere ein Diffusor, als Übergang zum Unterwasser an.

Diese Variante kommt bevorzugt bei Mitteldruckanlagen oder bei klassischen Talsperren zum Einsatz. Je nach Talsperrenhöhe und Verlandungsszenario wird die Schachthöhe am Staubauwerk gewählt. Die Energierückgewinnung im Diffusor erfolgt bevorzugt erst luftseitig.

Alternativ zum direkten Anbringen des Schachts am Staubauwerk wird der Schacht am Ufer aufgestellt oder direkt in den Fels gebohrt bzw. im Fels errichtet. Hierbei kann eine bestehende Bauumleitung modifiziert als Verbindung zum Unterwasser genutzt werden. Der Schacht ist bevorzugt als zylindrische Bohrung, insbesondere im Fels, ausgebildet. Bei stabilem Fels bilden die Wände des Bohrloches, also das Gestein selbst, direkt die Schachtwandung. Alternativ kann der Schacht in das Bohrloch eingesetzt werden oder im Bohrloch betoniert werden. Ferner ist vorteilhafterweise ein Zulauf aus dem Oberwasser in den Schacht bzw. in das Bohrloch mittels einer Beileitung vorgesehen. Zwei Varianten eines Schachts im Fels sind bevorzugt. In der ersten Variante wird der Seeinhalt (Oberwasser) über einen Schacht im Fels ins Unterwasser abturbiniert. In der zweiten Variante werden Beileitungen in den See abturbiniert. Beileitungen führen das Wasser im Freispiegelabfluss aus einem anderen Tal in einen Speicher. D.h. dass es immer eine Spiegeldifferenz zwischen ankommendem Freispiegelabfluss und Wasserstand im Speicher gibt. Diese Differenz, die sich mit Füllen des Speichers verringert, kann bevorzugt energetisch genutzt werden. In vorbekannten Methoden wird diese Differenz nicht genutzt und das Wasser springt über den Felsen ins Staubecken.

Die Vorteile des erfindungsgemäßen Schachtkraftwerks im Überblick: Marginale Strömungsumlenkung durch bevorzugte Modulbauweise und bevorzugte Mehrfachanordnung mehrerer Schachtkraftwerke an einem Staubauwerk, Turbinen im und am Wehr integrierbar ohne gravierende Strömungsumlenkung, Schachteinlauf mit horizontaler Rechenebene, geringe Sohleintiefung, integrierte Geschiebespülung, keine baulichen Ufereingriffe, keine Geräuschemissionen, keine Generatorkühlung nötig, keine sichtbaren Kraftwerksbauten, Fischabstieg über ständig beaufschlagte Spülklappe möglich.

Das Schachtkraftwerk umfasst ein Schachtkraftwerksmodul zur Stromerzeugung durch Energieumwandlung eines Abflusses zwischen Oberwasser und Unterwasser, umfassend ein vertikales Schachtmodul, dessen Schachtkrone eine sohlparallele Einlaufebene bildet, welche dazu ausgebildet ist, um unterhalb des Wasserstands des Oberwassers zu verlaufen, wobei das Schachtmodul nach oben offen ist und an seinem unteren Ende mit einem Boden verschlossen ist, ein Einheitenmodul aus einer Turbine und einer elektrischen Maschine, wobei das Einheitenmodul zur Anordnung komplett unter Wasser im Schachtmodul ausgebildet ist, und wobei die Turbine zur Anordnung mit vertikalem oder horizontalem Wasserdurchlauf ausgebildet ist, und ein an die Turbine anzuschließendes Ablaufmodul, welches einen geschlossenen Strömungskanal darstellt und dazu ausgebildet ist, um durch einen Durchlass im Schachtmodul zum Unterwasser zu führen. Auch in diesem Schachtkraftwerksmodul kommt die erfindungsgemäße Schachtspülöffnung zum Einsatz.

Für die Variante des vertikalen Wasserdurchlaufs ist in einer horizontalen Ebene eines Turbinenlaufrades der Turbine eine erste Querschnittsfläche des Schachts wesentlich größer als eine durch das Turbinenlaufrad beanspruchte, zweite Querschnittsfläche.

Bei der Variante des horizontalen Wasserdurchlaufs ist eine horizontale erste Querschnittsfläche des Schachts wesentlich größer ist als eine durch das Turbinenlaufrad beanspruchte, vertikale zweite Querschnittsfläche.

Die vorteilhaften Ausgestaltungen, wie sie in Verbindung mit dem erfindungsgemäßen Schachtkraftwerk diskutiert wurden, finden entsprechend bevorzugte Anwendung auf das erfindungsgemäße Schachtkraftwerksmodul. Das eigenständige Schachtmodul, das auch unabhängig von einem Staubauwerk aufgestellt werden kann, besteht aus einem vertikal durchströmten Schacht mit vertikaler Einlaufebene und einer Turbine mit elektrischer Maschine, die permanent unter Wasser angeordnet sind. Das Schachtmodul kann bevorzugt in einem natürlich oder künstlich aufgestauten Wasserkörper frei oder angebaut an funktional andersartige (Wasser-)Bauten aufgestellt werden. Das Schachtmodul integriert bevorzugt eine horizontale Rechenebene mit Reinigung. Wirbel müssen mittels hydraulischer Maßnahmen verhindert werden. Die modulare Bauweise erlaubt eine Aufstellung des Schachtkraftwerks örtlich losgelöst (z.B. vorgelagert) von einem zu errichtenden Sperrenbauwerk, einer schon bestehenden Sperre oder in einem bestehenden Wasserspeicher. Eine hydraulische Verbindung zwischen Ober- und Unterwasser muss in jedem Fall gewährleistet werden.

Das erfindungsgemäße Schachtkraftwerk bzw. das Schachtkraftwerksmodul umfasst bevorzugt einen Schacht mit einfachem Querschnitt, insbesondere rechteckig oder kreis- oder halbkreisförmig, mit vertikalen oder annähernd vertikalen Wänden. Auf alle Fälle wird bevorzugt die übliche, strömungsgünstige Verengung gegen die Turbine vermieden und somit eine kostengünstige Schachtgeometrie gewählt. Zur Strömungslenkung können bevorzugt einfache Leitelemente oder ein optimierter Leitapparat der hydraulischen Maschine zur Anwendung kommen. Bevorzugt sind strömungsgünstig geformte Leitelemente, insbesondere spiralförmig verlaufende Leitelemente, im Schacht angeordnet. Der Querschnitt des Schachts ist bevorzugt viel größer als derjenige, der durch das Turbinenlaufrad beansprucht wird. In vorbekannten Vorrichtungen werden die unterschiedlichen Querschnitte durch eine komplexe, gekrümmte Schalung angeglichen, um Verluste gering zu halten. Demgegenüber wird hier bevorzugt eine hydraulisch ungünstige Geometrie gewählt, wobei der ungünstige Strömungsverlauf durch eine große Querschnittsfläche und eventuell durch Leitelemente und/oder einen Leitapparat wett gemacht wird. Die Geschwindigkeiten sind wegen der großen Querschnittsfläche gering und entsprechend auch die hydraulischen Verluste.

Bevorzugt wird bei vorgeschlagenem Kraftwerk weder ein Luftraum, eine Zutrittsmöglichkeit noch eine seitliche Verbindung in Form einer klassischen, begehbaren Kraftwerkszentrale verwendet. In vorbekannten Vorrichtungen sind die Turbinen in einem trockenen, zusammenhängenden Raum aufgestellt, und zwar nebeneinander, d.h. eine Turbine pro Einlauf. Erfindungsgemäß gibt es keine solche Querverbindung.

Im Folgenden wird die Erfindung anhand von Ausführungsbeispielen genauer erläutert. Dabei zeigt:
- Fig. 1: einen Schnitt durch ein erfindungsgemäßes Schachtkraftwerk nach einem ersten Ausführungsbeispiel,
- Fig. 2: einen weiteren Schnitt durch das erfindungsgemäße Schachtkraftwerk nach dem ersten Ausführungsbeispiel,
- Fig. 3: eine Draufsicht auf das erfindungsgemäße Schachtkraftwerk nach dem ersten Ausführungsbeispiel,
- Fig. 4: eine Schnittansicht des erfindungsgemäßen Schachtkraftwerks nach einem zweiten Ausführungsbeispiel,
- Fig. 5: eine weitere Schnittansicht des erfindungsgemäßen Schachtkraftwerks nach dem zweiten Ausführungsbeispiel,
- Fig. 6: eine Draufsicht auf das erfindungsgemäße Schachtkraftwerk nach dem zweiten Ausführungsbeispiel,
- Fig. 7: eine Schnittansicht des erfindungsgemäßen Schachtkraftwerks nach einem dritten Ausführungsbeispiel,
- Fig. 8: eine weitere Schnittansicht des erfindungsgemäßen Schachtkraftwerks nach dem dritten Ausführungsbeispiel,
- Fig. 9: eine Draufsicht auf das erfindungsgemäße Schachtkraftwerk nach dem dritten Ausführungsbeispiel,
- Fig. 10: eine Schnittansicht des erfindungsgemäßen Schachtkraftwerks nach einem vierten Ausführungsbeispiel,
- Fig. 11: eine weitere Schnittansicht des erfindungsgemäßen Schachtkraftwerks nach dem vierten Ausführungsbeispiel,
- Fig. 12: eine Draufsicht auf das erfindungsgemäße Schachtkraftwerk nach dem vierten Ausführungsbeispiel,
- Fig. 13: eine erste Variante einer Klappe für alle Ausführungsbeispiele,
- Fig. 14, 15: eine zweite Variante der Klappe für alle Ausführungsbeispiele,
- Fig. 16: einen Schnitt durch ein erfindungsgemäßes Schachtkraftwerk nach einem fünften Ausführungsbeispiel,
- Fig. 17: einen weiteren Schnitt durch das erfindungsgemäße Schachtkraftwerk nach dem fünften Ausführungsbeispiel,
- Fig. 18: eine Draufsicht auf das erfindungsgemäße Schachtkraftwerk nach dem fünften Ausführungsbeispiel,
- Fig. 19: eine Schnittansicht des erfindungsgemäßen Schachtkraftwerks nach einem sechsten Ausführungsbeispiel,
- Fig. 20: eine weitere Schnittansicht des erfindungsgemäßen Schachtkraftwerks nach dem sechsten Ausführungsbeispiel,
- Fig. 21: eine Draufsicht auf das erfindungsgemäße Schachtkraftwerk nach dem sechsten Ausführungsbeispiel,
- Fig. 22: eine Schnittansicht des erfindungsgemäßen Schachtkraftwerks nach einem siebten Ausführungsbeispiel,
- Fig. 23: eine weitere Schnittansicht des erfindungsgemäßen Schachtkraftwerks nach dem siebten Ausführungsbeispiel,
- Fig. 24: eine Draufsicht auf das erfindungsgemäße Schachtkraftwerk nach dem siebten Ausführungsbeispiel,
- Fig. 25a: eine Schnittansicht des erfindungsgemäßen Schachtkraftwerks nach einem achten Ausführungsbeispiel mit geschlossener Schachtspülöffnung,
- Fig. 25b: eine Schnittansicht des erfindungsgemäßen Schachtkraftwerks nach dem achten Ausführungsbeispiel mit geöffneter Schachtspülöffnung,
- Fig. 26: eine Schnittansicht des erfindungsgemäßen Schachtkraftwerks nach einem neunten Ausführungsbeispiel mit mehreren Schachtspülöffnungen,
- Fig. 27-29: ein modulare Bauweise des erfindungsgemäßen Schachtkraftwerks nach einem zehnten Ausführungsbeispiel,
- Fig. 30: das erfindungsgemäße Schächtkraftwerk mit Fischaufstiegsmodul nach einem elften Ausführungsbeispiel, und
- Fig. 31a-c: verschiedene Betriebsstellungen des erfindungsgemäßen Schachtkraftwerks gemäß dem elften Ausführungsbeispiel.

Im Folgenden wird anhand des ersten bis vierten Ausführungsbeispiels ein Schachtkraftwerk bzw. Schachtkraftwerksmodul mit vertikalem Wasserdurchlauf beschrieben. Das fünfte bis siebte Ausführungsbeispiel beschreibt ein Schachtkraftwerk bzw. Schachtkraftwerksmodul mit horizontalem Wasserdurchlauf. Anhand des achten und neunten Ausführungsbeispiels werden Vorrichtungen zur Spülung des Schachtes beschrieben. Diese Vorrichtungen zum Spülen sind bevorzugt mit jedem der Ausführungsbeispiele 1 bis 7 zu kombinieren. Das Ausführungsbeispiel 10 beschreibt die baukastenartige bzw. modulare Bauweise des Erfindung. Das elfte Ausführungsbeispiel beschreibt ein Fischaufstiegsmodul. Die modulare Bauweise nach dem zehnten Ausführungsbeispiel sowie das Fischaufstiegsmodul nach dem elften Ausführungsbeispiel sind auf sämtliche Schachtkraftwerke nach den Ausführungsbeispielen 1 bis 9 bevorzugt anzuwenden. Gleiche bzw. funktional gleiche Bauteile sind in allen Ausführungsbeispielen mit den selben Bezugszeichen versehen.

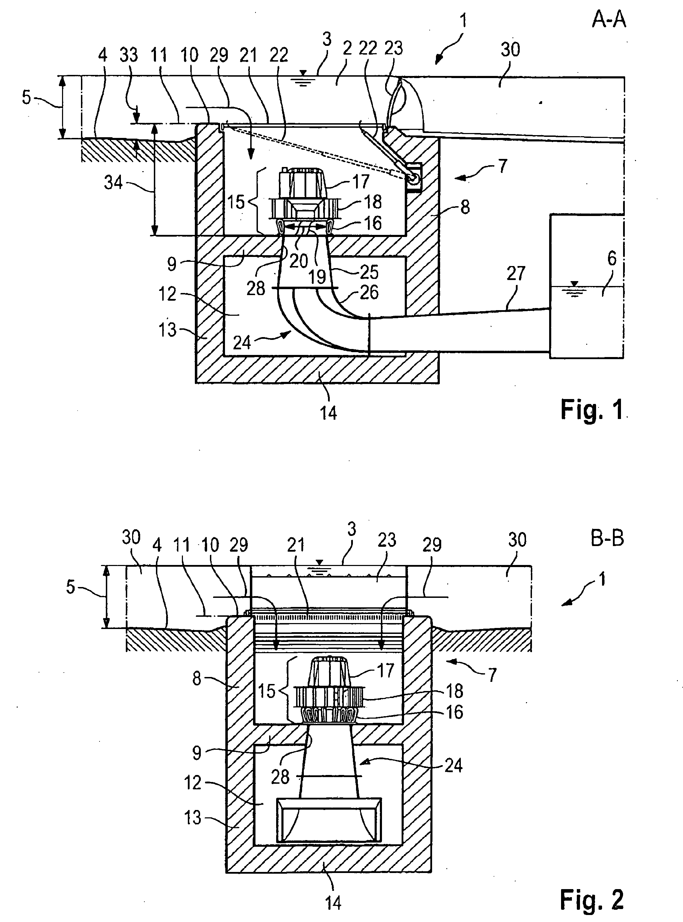

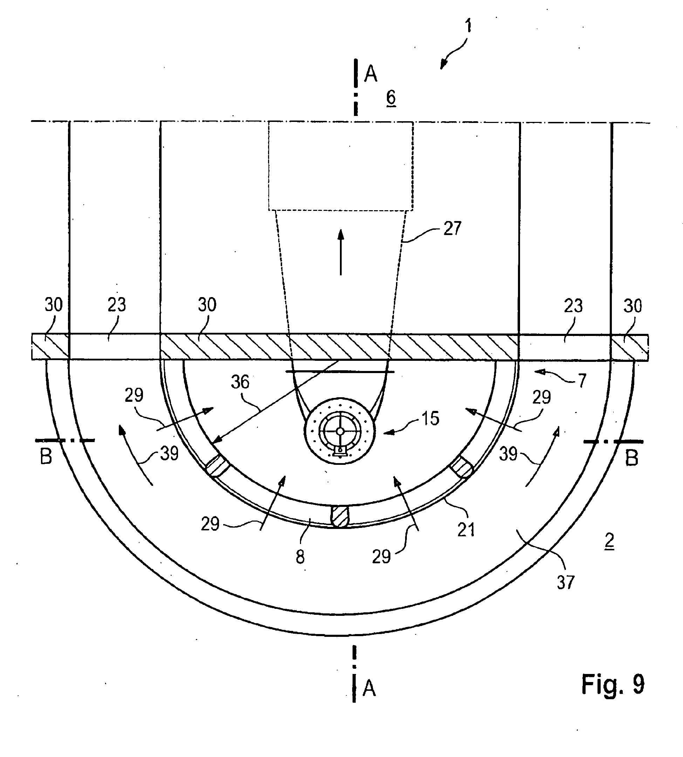

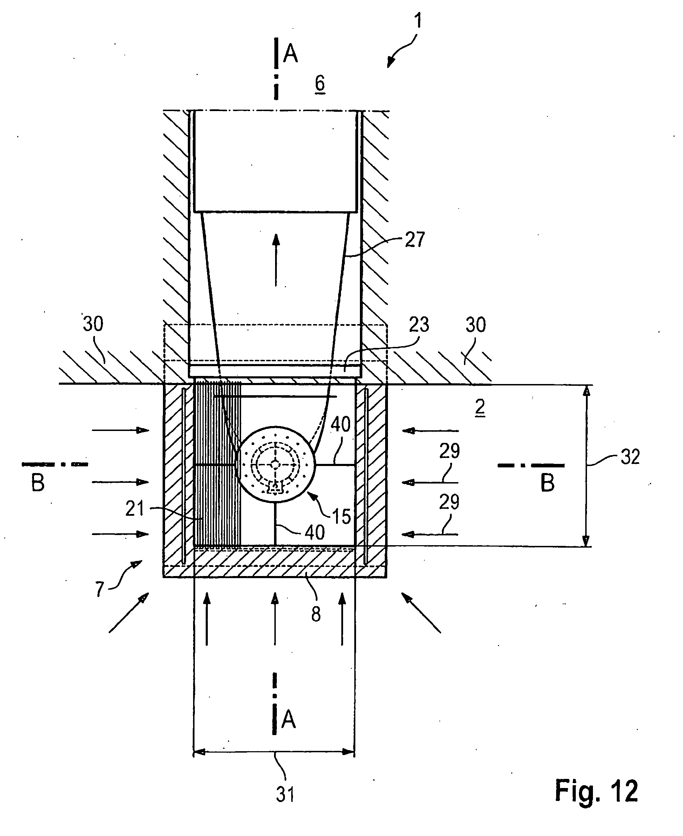

Die Figuren 1 bis 12 zeigen ein Schachtkraftwerk bzw. Schachtkraftwerksmodul mit vertikalem Wasserdurchlauf nach dem ersten bis vierten Ausführungsbeispiel:

Die Fig. 1 bis 3 zeigen das erste Ausführungsbeispiel des Schachtkraftwerks 1. Dabei ist ein Oberwasser 2 mit Oberwasserstand 3 und Oberwassersohlebene 4 zu sehen. Zwischen dem Oberwasserstand 3 und Oberwassersohlebene 4 erstreckt sich eine Oberwassertiefe 5. Etwas tiefer als das Oberwasser 2 liegt ein Unterwasser 6. Das Schachtkraftwerk 1 nutzt die Fallhöhe zwischen dem Oberwasser 2 und dem Unterwasser 6 zur Erzeugung elektrischer Energie aus.

Hierzu umfasst das Schachtkraftwerk 1 einen vertikalen Schacht 7, bestehend aus vertikalen Seitenwänden 8 und einem Boden 9. Der Boden 9 des vertikalen Schachts 7 ist horizontal angeordnet. Von diesem Boden 9 erstrecken sich in vertikaler Richtung nach oben die Seitenwände 8. Die Seitenwände 8 schließen ebenbündig mit einer Schachtoberkante bzw. Schachtkrone 10 ab. Diese Schachtkrone 10 definiert eine horizontale Einlaufebene 11 des Schachtes 7. Eine lichte Schachttiefe 34 definiert sich von dieser horizontalen Einlaufebene 11 bis zur Oberkante des Bodens 9. Die horizontale Einlaufebene 11 befindet sich deutlich unterhalb des Oberwasserstandes 3 und um einen Überstand 33 höher als die Oberwassersohlebene 4.

Unterhalb des vertikalen Schachts 7 ist ein Hohlraum 12 mit Hohlraumseitenwänden 13 und einem Hohlraumboden 14 angeordnet. Die Hohlraumseitenwände 13 sind eine integrale, vertikale, nach unten gerichtete Verlängerung der vertikalen Seitenwände 8 des Schachtes 7. Der Hohlraumboden 14 ist parallel zum Boden 9 des Schachtes 7 nach unten versetzt.

Auf dem Boden 9 des Schachtes 7 befindet sich eine Einheit, bestehend aus einer Turbine 16, einer elektrischen Maschine 17, ausgebildet als Generator, und einem Leitapparat 18. Die Turbine 16 ist hierbei mit dem Boden 9 fest verbunden. Über der Turbine 16 befindet sich direkt der Leitapparat 18 und auf dem Leitapparat 18 befindet sich direkt die elektrische Maschine 17. Wesentlicher Bestandteil der Turbine 16 ist ein Turbinenlaufrad 19 mit einem Turbinenlaufraddurchmesser 20. Eine Rotationsachse des Turbinenlaufrades 19 sowie eine Ankerachse der elektrischen Maschine sind koaxial zueinander und vertikal.

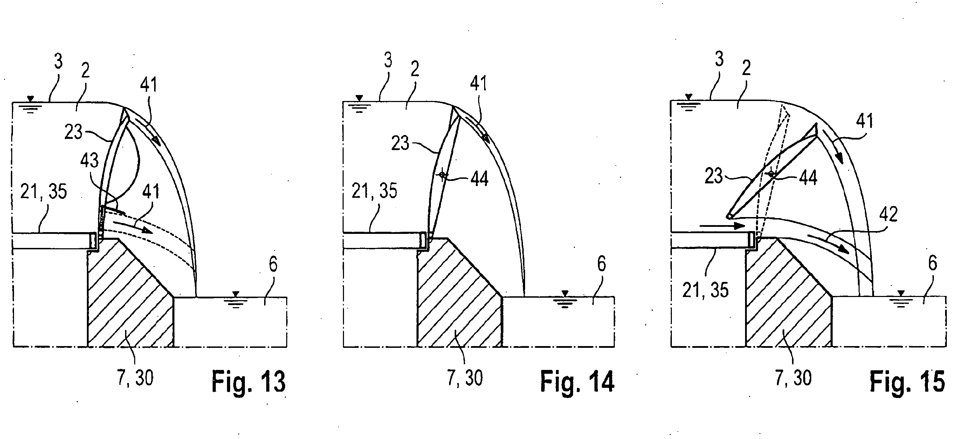

Die oben offene Seite des Schachtes 7 ist mit einem horizontal angeordneten Rechen 21 versehen. Dieser Rechen 21 befindet sich in der horizontalen Einlaufebene 11. Des Weiteren ist zur Reinigung des Rechens 21 eine Rechenreinigung 22 innerhalb des Schachtes unter Wasser angeordnet. In Verlängerung einer Seitenwand 8 des Schachtes 7 befindet sich ein Verschluss 23, welcher eine Verbindung zwischen Oberwasser 2 und Unterwasser 6 unter Umgehung des Schachtes 7 und insbesondere unter Umgehung der Einheit 15 ermöglicht. Der Verschluss 23 kann als Klappe oder Schütz ausgebildet sein. Die Klappe 23 wird im Detail in den Fig. 13 bis 15 beschrieben.

Die am Boden 9 befestigte Einheit 15 befindet sich direkt über einem kreisrunden Durchlass 28 im Boden 9. Dadurch kann die Einheit 15 über einen Strömungskanal bildenden gekrümmten Ablauf 24 mit dem Unterwasser 6 verbunden werden. Hierzu umfasst der Ablauf 24 einen Konus 25, einen sich daran anschließenden Krümmer 26 sowie ein Saugrohr bzw. einen Saugschlauch 27. Der Konus 25 steckt im Durchlass 28 und ist dicht verbunden mit einem Auslass der Turbine 16. Über diesen Konus 25 läuft die Strömung in den um 90° gekrümmten Krümmer 26 und von dort direkt in den Saugschlauch 27. Der Saugschlauch 27 durchbricht eine der Hohlraumseitenwände 13. Der Hohlraum 12 beherbergt somit den Konus 25, den Krümmer 26 sowie einen Teil des Saugschlauchs 27. Damit der Hohlraum 12 bei Wartungsarbeiten nicht auf schwimmt, ist selbiger mit Ballast gefüllt.

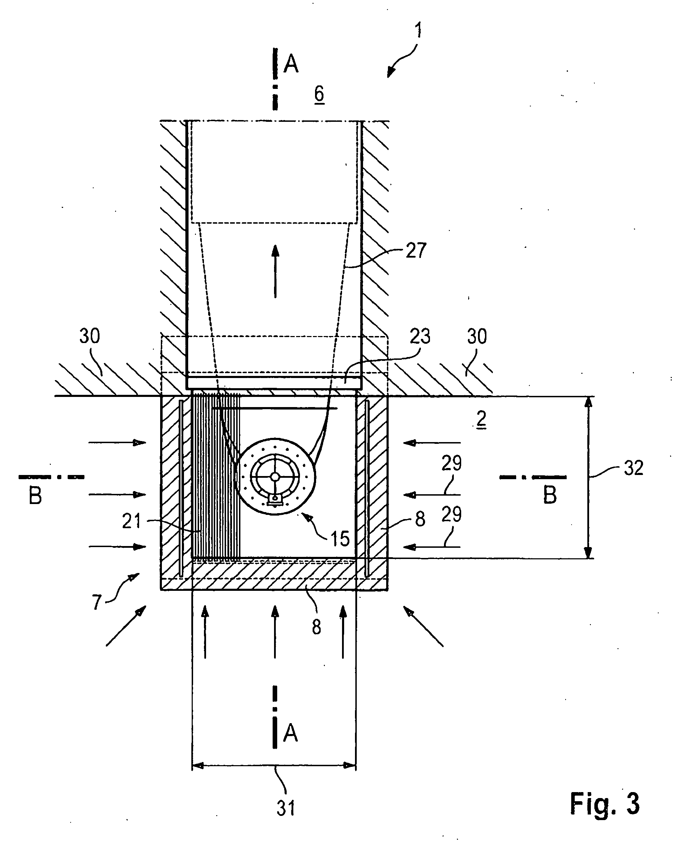

Die Fig. 2 und 3 zeigen ebenfalls das erste Ausführungsbeispiel. In der Draufsicht gemäß Fig. 3 ist ein Schnitt A eingezeichnet, wie ihn Fig. 1 zeigt, sowie ein Schnitt B gemäß Fig. 2. In den Fig. 2 und 3 ist gut zu sehen, dass der Schacht 7 mit einer vertikalen Seitenwand 8 direkt an einem Staubauwerk 30 angrenzt. Die Fig. 3 zeigt eine Querschnittsfläche des Schachtes 7 (erste Querschnittsfläche), welche sich durch eine erste lichte Seitenlänge 31 und eine zweite lichte Seitenlänge, 32 des Schachtes 7 definiert. Die Querschnittsfläche des Schachtes 7 ist somit das Produkt aus erster Seitenlänge 31 und zweiter Seitenlänge 32. Eine durch das Turbinenlaufrad 19 beanspruchte Querschnittsfläche (zweite Querschnittsfläche) berechnet sich durch den in Fig. 1 eingezeichneten Turbinenlaufraddurchmesser. Die durch das Turbinenlaufrad 19 eingenommene Querschnittsfläche innerhalb der Turbine 16 ist somit das Produkt aus dem halben Turbinenlaufraddurchmesser 20 im Quadrat und Pi. Entscheidend an vorliegender Erfindung ist nun, dass die Querschnittsfläche des Schachtes 7 wesentlich größer ist als die durch das Turbinenlaufrad 19 beanspruchte Querschnittsfläche. Dadurch ist die Fliessgeschwindigkeit des Wassers in der Rechenebene sehr gering und wird erst unmittelbar vor der Turbine 16 beschleunigt, wodurch einerseits die Schiebe- und Schwebegutbelastung des Schachtes 7 reduziert wird und zum anderen die Fische das Schachtkraftwerk 1 über die Klappe 23 ohne Turbinendurchgang passieren können.

Das Wasser fließt über die in den Fig. 1, 2 und 3 eingezeichnete Einlaufrichtung 29 von drei Seiten über die horizontale Einlaufebene 11 in den Schacht 7. Über den Leitapparat 18 wird das Wasser in vertikaler Richtung auf das Turbinenlaufrad 19 geleitet. Am unten liegenden Turbinenausgang fließt das Wasser über den Konus 25 in den Krümmer 26 und wird dort in horizontale Fließrichtung umgelenkt. Über den Saugschlauch 27 verlässt das Wasser das Schachtkraftwerk 1 und fließt in das Unterwasser 6 ab. Die Rotationsbewegung im Turbinenlaufrad 19 wird über die elektrische Maschine 17 in elektrischen Strom gewandelt. Dabei sitzt die komplette Einheit 15 im Schacht 7 und somit komplett unter Wasser. Folglich ist keine weitere Kühlung der Einheit 15 nötig. Der erzeugte elektrische Strom wird über eine nicht dargestellte Kabelverbindung nach außen geführt.

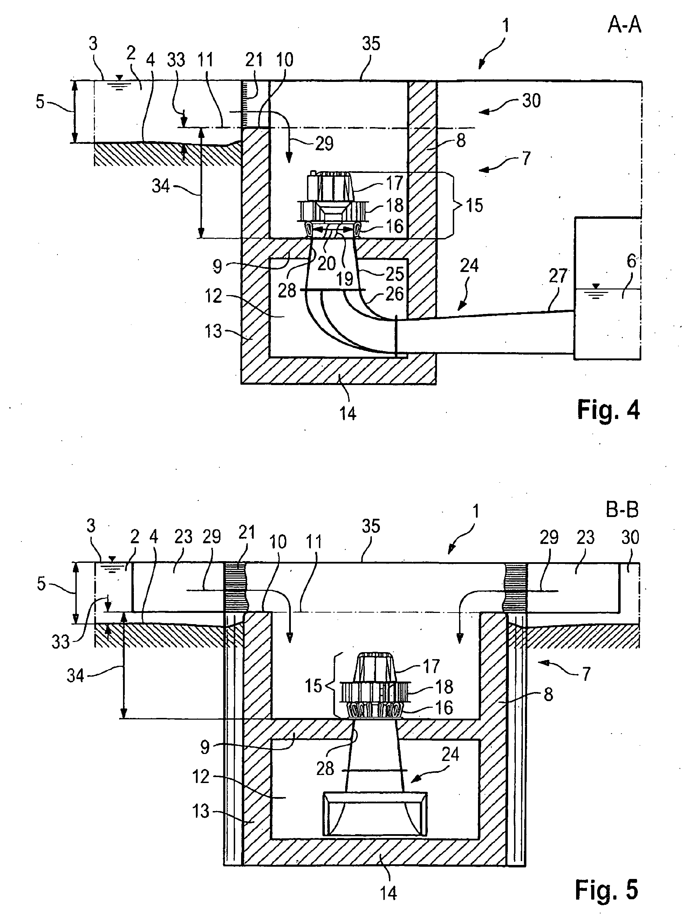

Die Fig. 4, 5, und 6 zeigen ein zweites Ausführungsbeispiel des Schachtkraftwerks 1. Gleiche bzw. funktional gleiche Bauteile sind in allen Ausführungsbeispielen mit den gleichen Bezugszeichen versehen.

Im Gegensatz zum ersten Ausführungsbeispiel zeigt das zweite Ausführungsbeispiel eine Variante mit halbrundem, vertikalem Schacht 7 sowie vertikal angeordnetem Rechen 21.

In den Fig. 4 und 5 ist gut zu sehen, dass hier der Rechen 21 vertikal als Verlängerung der halbrunden vertikalen Seitenwand 8 des Schachtes 7 vorgesehen ist. Dabei erstrecken sich die Rechen 21 von der Schachtkrone 10 bis zumindest an den Oberwasserstand 3. Aus Sicherheitsgründen ist der komplette Schacht 7 ungefähr auf Höhe des Oberwasserstandes 3 mit einer Abdeckung 35 verdeckt.

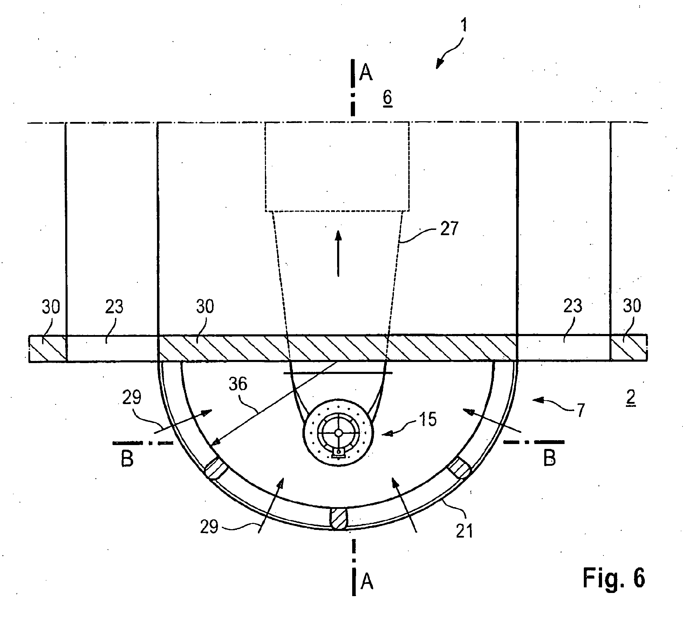

Die Fig. 6 zeigt die halbrunde Ausgestaltung des vertikalen Schachtes 7, wobei die gerade Seite des halbrunden Schachtes 7 mit dem Staubauwerk 30 vereint ist. Dies zeigt insbesondere Fig. 4, wonach die vertikale Seitenwand 8 exakt ab der horizontalen Einlaufebene 11 integral in das Staubauwerk 30 übergeht. Eine Querschnittsfläche (erste Querschnittsfläche) des Schachtes 7 definiert sich durch den Radius 36. Somit berechnet sich hier die Querschnittsfläche des Schachtes 7 zum Halben des Produktes aus Radius 36 im Quadrat und Pi.

Im zweiten Ausführungsbeispiel sind zwei Klappen 23 seitlich des Schachtes 7 vorgesehen. Das durch das Oberwasser 2 angetragene Geschiebe bleibt am Überstand 34 hängen und rutscht entlang dem Halbrund zu den Klappen 23. Dadurch wird vermieden, dass die Turbine 16 zu viel Geschiebe ansaugt.

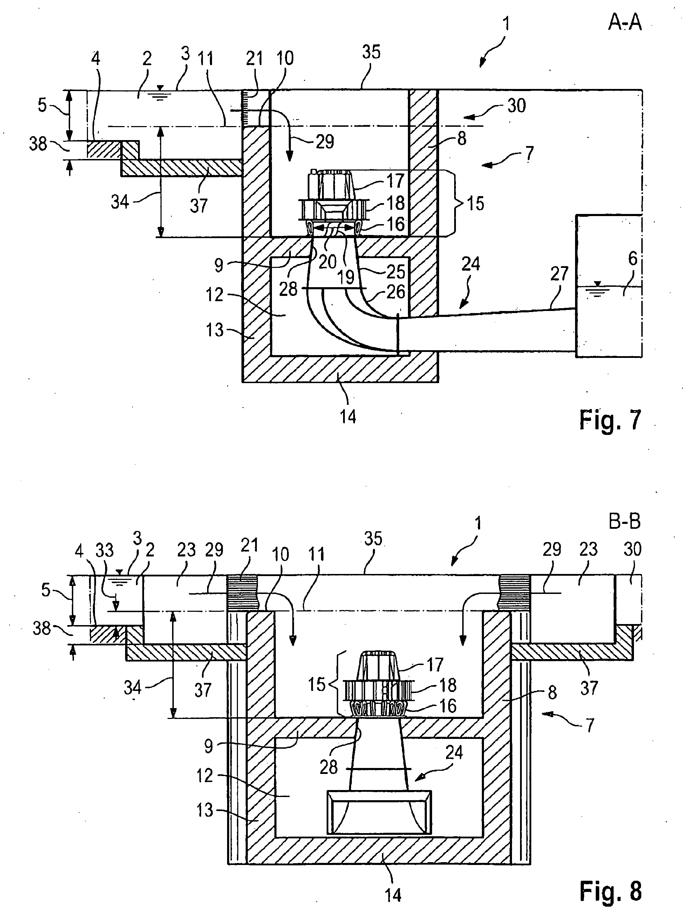

Die Fig. 7 bis 9 zeigen ein drittes Ausführungsbeispiel des Schachtkraftwerks. Gleiche bzw. funktional gleiche Bauteile sind in allen Ausführungsbeispielen mit den gleichen Bezugszeichen bezeichnet.

Das dritte Ausführungsbeispiel ist genauso wie das zweite Ausführungsbeispiel mit einem halbrunden vertikalen Schacht 7, zwei seitlichen Klappen 23 und vertikal stehenden Rechen 21 mit horizontalen Stäben ausgeführt.

Als zusätzliches Merkmal ist im dritten Ausführungsbeispiel außerhalb des Schachtes 7 bzw. außerhalb der vertikalen Schachtwände 8 entlang des gesamten Halbrundes ein Spülkanal bzw. eine Spülrille 37 ausgebildet. Diese Spülrille 37 führt von einer Klappe 23 um den Schacht 7 herum zur anderen Klappe 23. Dabei liegt der Spülkanal 37 um eine Spülkanaltiefe 38 unterhalb der Oberwassersohlebene 4. Zum Auffangen des Geschiebes dient somit im dritten Ausführungsbeispiel nicht mehr nur der Überstand 23, sondern auch die Spülkanaltiefe 38. Bei Öffnen der Klappen 23 beidseitig des Schachtes 7 entsteht ein Spülstrom 39 in der Spülrinne 37 hin zu beiden Klappen 23.

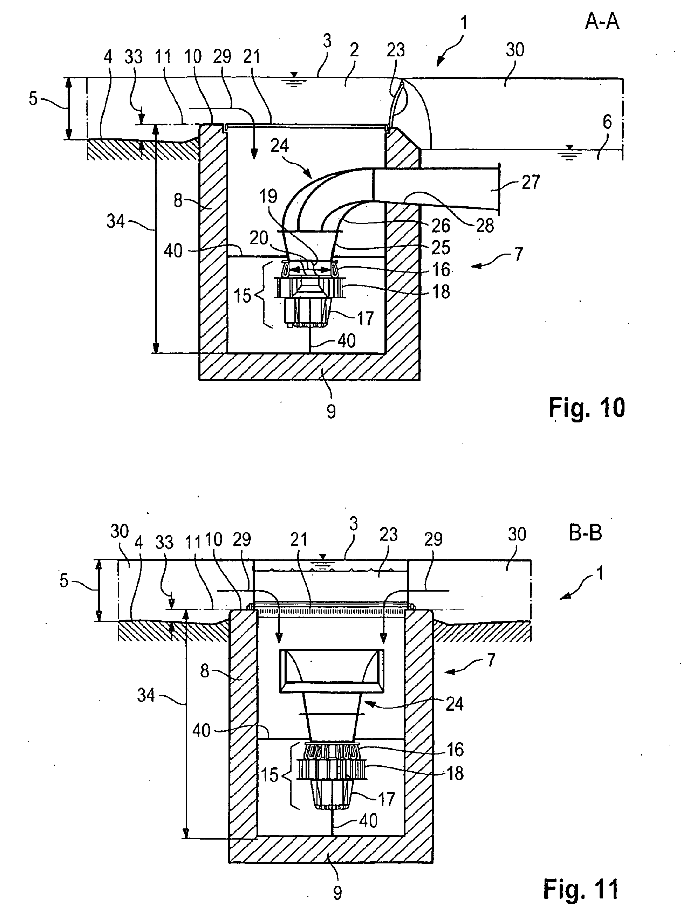

Die Fig. 10, 11 und 12 zeigen ein viertes Ausführungsbeispiel des Schachtkraftwerks 1. Gleiche bzw. funktional gleiche Bauteile sind in allen Ausführungsbeispielen mit den gleichen Bezugszeichen bezeichnet.

Das vierte Ausführungsbeispiel ist ähnlich aufgebaut wie das erste Ausführungsbeispiel. Allerdings ist hier die komplette Einheit 15 um 180° gedreht verbaut, so dass ein Strömungsausgang der Turbine 16 nach oben gerichtet ist. Entsprechend ist auch der Konus 25 über der Einheit 15 angeordnet und der gekrümmte Ablauf 24 erstreckt sich von der Einheit 15 nach oben mit einem 90°-Bogen zum Unterwasser 6. Der entsprechende Durchlass 28 befindet sich in diesem Ausführungsbeispiel in einer vertikalen Seitenwand 8. Hier erstreckt sich nicht der Konus 25, sondern der Saugschlauch 27 durch den Durchbruch 28. Ferner ist im vierten Ausführungsbeispiel der Boden 9 ohne jeglichen Durchbruch ausgeführt. Ebenso entfällt der komplette Hohlraum 12. Die Einheit 15 steht hier nicht mehr direkt auf dem Boden 9 auf, sondern ist über ein Gestänge 40 in der unteren Hälfte der Schachttiefe 34 positioniert. Das Wasser läuft hier ebenfalls über den Einlauf 29 von drei Seiten in den Schacht 7 hinein. Ab dem Leitapparat 18 wird das Wasser in vertikaler Richtung nach oben in das Turbinenlaufrad 19 und von dort weiter nach oben in den Krümmer 26 geleitet. Nach dem Krümmer läuft das Wasser wieder horizontal über den Saugschlauch 27 in das Unterwasser 6.

Das vierte Ausführungsbeispiel eignet sich insbesondere für sehr geringe Fallhöhen. Wobei hier durchaus ein Wasserstand des Unterwassers 6 auf Höhe der Oberwassersohlebene 4 liegen kann.

Es ist insbesondere darauf hinzuweisen, dass die verschiedenen Eigenschaften aller Ausführungsbeispiele gemischt werden können. So ist in jedem der vier Ausführungsbeispiele sowohl eine horizontale als auch vertikale Rechenanordnung, eine runde oder vieleckige Schachtgeometrie, ein nach oben oder nach unten gerichteter Auslauf 24, eine oder mehrere Klappen 23 und/oder eine Spülrinne 27 bevorzugt.

Im Folgenden werden anhand der Fig. 13, 14 und 15 zwei verschiedene Varianten der Klappe 23 vorgestellt. Für alle, die bereits beschriebenen sowie die noch folgenden Ausführungsbeispiele, sind jeweils beiden Klappenvarianten vorteilhaft anwendbar.

Fig. 13 zeigt eine erste Variante der Klappe 23. Wie in den verschiedenen Ausführungsbeispielen gezeigt wurde, kann die Klappe 23 entweder auf einer Seitenwand 8 des vertikalen Schachtes 7 oder im Staubauwerk 30 angeordnet sein. Die Klappe 23 ist in geschlossenen Zustand, wie Fig. 13 zeigt, etwas gegenüber dem Oberwasserstand 3 nach unten versetzt, so dass eine permanente Überströmung 41 entsteht. Des Weiteren ist die Klappe 23 in der ersten Variante drehbar, so dass die Überströmung 41 regelbar ist.

Im unteren Bereich der Klappe 23 sieht man, dass sich eine Unterkante der Klappe 23 in etwa auf Höhe des Rechens 21 bzw. der Abdeckung 35 befindet. Um zwischen der Klappe 23 und dem Schacht 7 bzw. dem Staubauwerk 30 eine Unterströmung 42 zu gewährleisten, ist hier ein integrierter Verschluss 43 vorgesehen. Dieser integrierte Verschluss 43 ist ein schwenkbarer Anteil im unteren Bereich der Klappe 23. Die Überströmung 41 genauso wie die Unterströmung 42 sind direkte Wasserverbindungen vom Oberwasser 2 zum Unterwasser 6 unter Umgehung des Schachtes 7 sowie unter Umgehung der stromerzeugenden Einheit 15.

Die Fig. 14 und 15 zeigen eine zweite Variante der Klappe 23. In Fig. 14 ist die Klappe 23 im geschlossenen Zustand gezeigt, wobei hier wiederum die Oberkante der Klappe 23 etwas nach unten versetzt ist gegenüber dem Oberwasserstand 3, so dass eine konstante Überströmung 41 entsteht. In dieser zweiten Variante ist kein integrierter Verschluss 43 vorgesehen. Anstatt dessen ist die Klappe 23 hier in ihrer Mitte um eine horizontale Achse 44 schwenkbar gelagert. Durch Ausschwenken der Klappe 23 wird gleichzeitig der Volumenstrom in der Überströmung 41 und in der Unterströmung 42 erhöht.

Alternativ zu den dreh- oder schwenkbaren Klappen der Fig. 13-15 ist ein vertikal verfahrbarer Verschluss bevorzugt vorgesehen. Durch absenken des Verschlusses wir die Überströmung 41 erzeugt. Durch ein vertikales verfahren des Verschlusses nach oben wir die Unterströmung 42 erzeugt.

Durch die konstante Überströmung 41 wird eine Wirbelbildung oberhalb des Schachtes 7 vermieden. Somit kann Treibgut stets unter Umgehung der stromerzeugenden Einheit 15 auf der Wasseroberfläche vom Oberwasser 2 zum Unterwasser 6 gespült werden. Durch die zeit- oder bedarfsgesteuerte Unterströmung 42 wird zum einen angetragenes Geschiebe, welches sich am Überstand 33 oder in der Spülrinne 37 angesammelt hat, unter Umgehung der stromerzeugenden Einheit 15 direkt aus dem Oberwasser 2 in das Unterwasser 6 entfernt. Zum Zweiten dient die Unterströmung 42 als Aaldurchlass bzw. dem Abstieg bodennah schwimmender Fische.

Erfindungsgemäß fließt in allen Ausführungsbeispielen die Strömung immer von oben nach unten durch den Schachtquerschnitt. Die Eintrittsebene zum Schacht ist immer unter Wasser und es sollte eine Mindestüberdeckung gewährleistet sein, damit keine lufteinziehenden Wirbel auftreten. Die Ausführungsbeispiele kommen bevorzugt an verlandeten Querbauwerken zum Einsatz. Diese sind nicht nur durch eine Spiegeldifferenz (Ober-/Unterwasser) gekennzeichnet, sondern auch dadurch, dass starker Geschiebetrieb bei Hochwasser stattfindet. Ferner treten hier bei geringer Fließtiefe und hohen Abflüssen hohe Geschwindigkeiten auf, die in der Rechenebene vor der Turbine auf unter 1 m/s verlangsamt werden müssen. Bei konventionellen Anlagen kann dies nur durch eine Tieferlegung des annähernd vertikalen Einlaufs zu den Turbinen erfolgen. Solche Anordnungen sind jedoch im Betrieb problematisch, da es zu Geschiebeablagerungen im Zulauf zu den Turbinen und damit zu Wirkungsgradeinschränkungen und Betriebsstörungen kommt. Im Gegensatz dazu bietet vorgestellte Erfindung die Möglichkeit, den Schachtquerschnitt beliebig in einer 2D Horizontalebene zu vergrößern und damit die Geschwindigkeiten problemlos auf 0,5 m/s oder geringer abzusenken. Die Größe des Schacht-Querschnitts wird damit zu einer zusätzlichen Stellgröße, die z.B. in Bezug auf Fischfreundlichkeit problemlos optimiert werden kann.

Das vorgeschlagene Konzept enthält betriebsfreundliche und nachhaltige Lösungen für die Geschiebeproblematik. Ferner kann Hochwasser problemlos abgeführt werden. Bevorzugt wird der Flusslauf in seiner gesamten Breite überströmt, d.h. der Kraftwerksbau hat keine Kapazitätseinbuße und aufgrund der Unterwasseranordnung keine Wasserschäden zur Folge. Ferner können bestehende, auch historische, Wehre genutzt werden, die aus wirtschaftlichen und Denkmalschutzgründen möglichst wenig modifiziert werden sollten. Bei konventionellen Buchtenkraftwerken muss das Wasser vom Flusslauf ausgeleitet und wieder zurückgeführt werden. Dies bedingt hohe Eingriffe, hohe Kosten, Schwierigkeiten im Betrieb und das Krafthaus ist sichtbar und akustisch wahrnehmbar. Vorgeschlagene Erfindung ändert am Abflussweg des bestehenden Flusslaufs nur wenig.

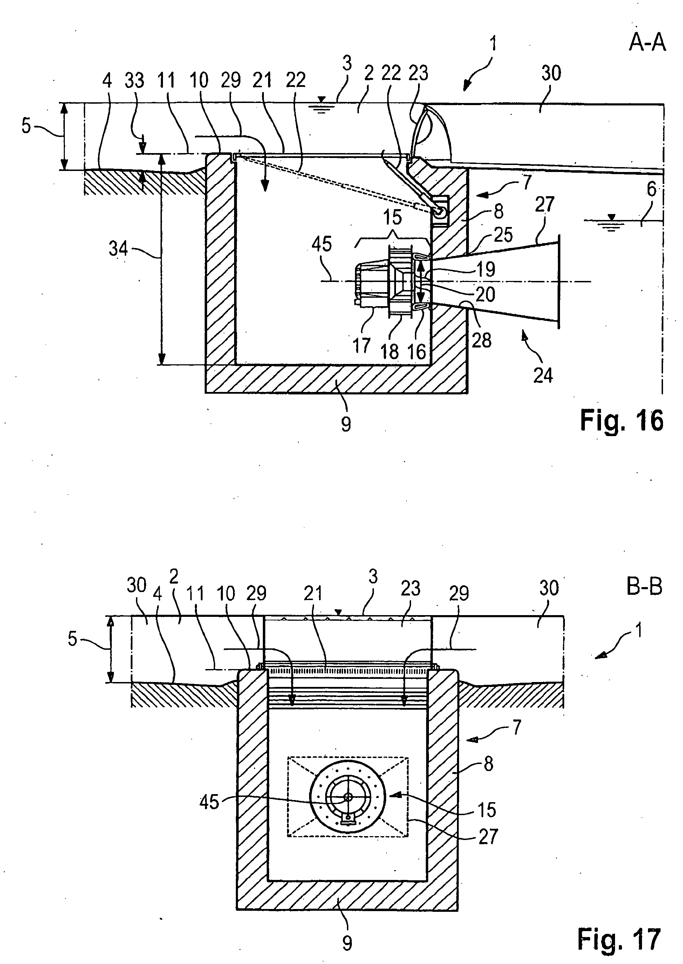

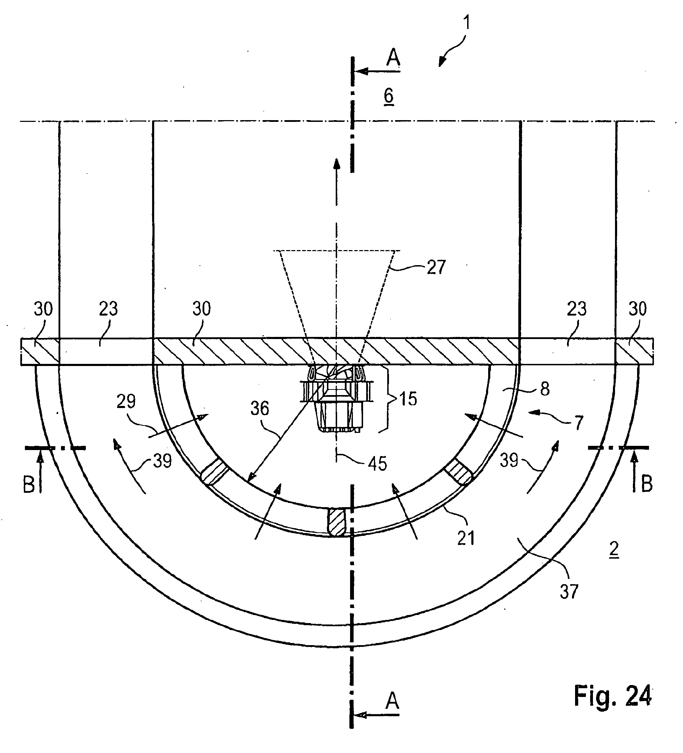

Die Figuren 16 bis 24 zeigen ein Schachtkraftwerk bzw. Schachtkraftwerksmodul mit horizontalem Wasserdurchlauf nach dem fünften bis siebten Ausführungsbeispiel:

Die Fig. 16 bis 18 zeigen das fünfte Ausführungsbeispiel des Schachtkraftwerks 1. Dabei ist das Oberwasser 2 mit Oberwasserstand 3 und Oberwassersohlebene 4 zu sehen. Zwischen dem Oberwasserstand 3 und Oberwassersohlebene 4 erstreckt sich die Oberwassertiefe 5. Etwas tiefer als das Oberwasser 2 liegt das Unterwasser 6. Das Schachtkraftwerk 1 nutzt die Fallhöhe zwischen dem Oberwasser 2 und dem Unterwasser 6 zur Erzeugung elektrischer Energie aus.

Hierzu umfasst das Schachtkraftwerk 1 den vertikalen Schacht 7, bestehend aus vertikalen Seitenwänden 8 und dem Boden 9. Der Boden 9 des vertikalen Schachts 7 ist horizontal angeordnet. Von diesem Boden 9 erstrecken sich in vertikaler Richtung nach oben die Seitenwände 8. Die Seitenwände 8 schließen ebenbündig mit der Schachtoberkante bzw. Schachtkrone 10 ab. Diese Schachtkrone 10 definiert die horizontale Einlaufebene 11 des Schachtes 7. Die lichte Schachttiefe 34 definiert sich von dieser horizontalen Einlaufebene 11 bis zur Oberkante des Bodens 9. Die horizontale Einlaufebene 11 befindet sich deutlich unterhalb des Oberwasserstandes 3 und um den Überstand 33 höher als die Oberwassersohlebene 4.

Auf der Seitenwand 8 des Schachtes 7 befindet sich eine horizontal angeordnete Einheit, bestehend aus der Turbine 16 mit einer Turbinenachse 45, der elektrischen Maschine 17, ausgebildet als Generator, und dem Leitapparat 18. Die Turbine 16 ist hierbei mit der Seitenwand 8 fest verbunden. Neben der Turbine 16 befindet sich direkt der Leitapparat 18 und neben dem Leitapparat 18 befindet sich direkt die elektrische Maschine 17. Wesentlicher Bestandteil der Turbine 16 ist ein vertikal angeordnetes Turbinenlaufrad 19 mit dem Turbinenlaufraddurchmesser 20. Eine Rotationsachse (Turbinenachse 45) des Turbinenlaufrades 19 sowie eine Ankerachse der elektrischen Maschine 17 sind koaxial zueinander und horizontal.

Die oben offene Seite des Schachtes 7 ist mit dem horizontal angeordneten Rechen 21 versehen. Dieser Rechen 21 befindet sich in der horizontalen Einlaufebene 11. Des Weiteren ist zur Reinigung des Rechens 21 die Rechenreinigung 22 innerhalb des Schachtes unter Wasser angeordnet. In Verlängerung einer Seitenwand 8 des Schachtes 7 befindet sich die Klappe 23, welche eine Verbindung zwischen Oberwasser 2 und Unterwasser 6 unter Umgehung des Schachtes 7 und insbesondere unter Umgehung der Einheit 15 ermöglicht. Die Klappe 23 wurde im Detail in den Fig. 13 bis 15 beschrieben.

Die an der Seitenwand 8 befestigte Einheit 15 befindet sich direkt an einem kreisrunden Durchlass 28 in der Seitenwand 8. Dadurch kann die Einheit 15 über einen Strömungskanal bildenden Ablauf 24 mit dem Unterwasser 6 verbunden werden. Hierzu umfasst der Ablauf 24 einen Konus 25 an den sich ein Saugrohr bzw. Saugschlauch 27 anschließt. Der Konus 25 steckt im Durchlass 28 und ist dicht verbunden mit einem Auslass der Turbine 16. Über diesen Konus 25 läuft die Strömung direkt in den Saugschlauch 27.

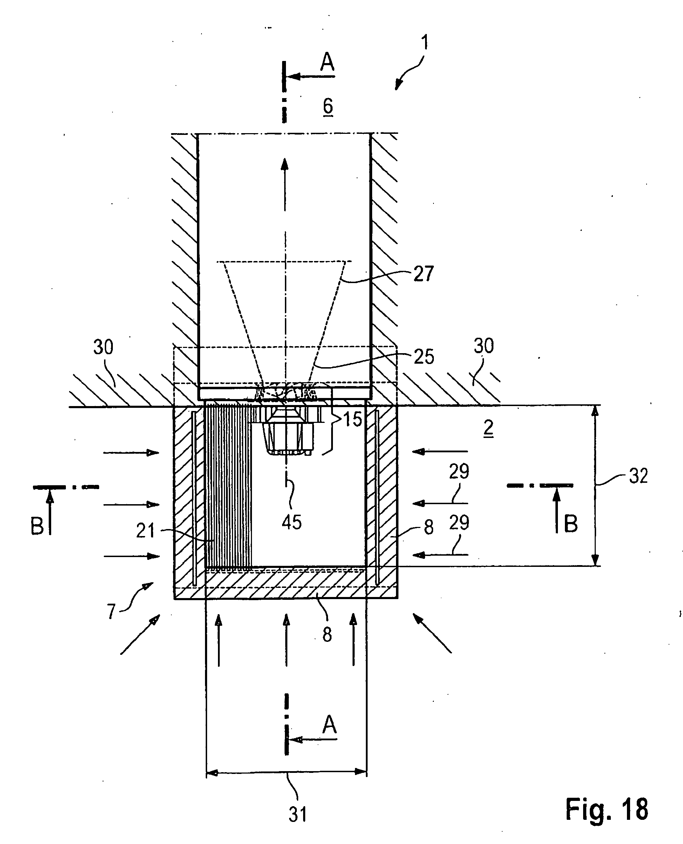

Die Fig. 17 und 18 zeigen ebenfalls das fünfte Ausführungsbeispiel. In der Draufsicht gemäß Fig. 18 ist ein Schnitt A eingezeichnet, wie ihn Fig. 16 zeigt, sowie ein Schnitt B gemäß Fig. 17. In den Fig. 17 und 18 ist gut zu sehen, dass der Schacht 7 mit einer vertikalen Seitenwand 8 direkt an einem Staubauwerk 30 angrenzt. Die Fig. 18 zeigt eine horizontale Querschnittsfläche des Schachtes 7 (erste Querschnittsfläche), welche sich durch die erste lichte Seitenlänge 31 und die zweite lichte Seitenlänge 32 des Schachtes 7 definiert. Die Querschnittsfläche des Schachtes 7 ist somit das Produkt aus erster Seitenlänge 31 und zweiter Seitenlänge 32. Abgesehen von einer kleinen Einschnürung des Schachtes 7 durch einen Absatz unterhalb einer Klappe 23 ist hier die erste Querschnittsfläche auf Höhe der Schachtkrone 10 und auf Höhe der Turbinenachse 45 gleich. Eine durch das Turbinenlaufrad 19 beanspruchte vertikale Querschnittsfläche (zweite Querschnittsfläche) berechnet sich durch den in Fig. 16 eingezeichneten Turbinenlaufraddurchmesser 20. Die durch das Turbinenlaufrad 19 eingenommene Querschnittsfläche innerhalb der Turbine 16 ist somit das Produkt aus dem halben Turbinenlaufraddurchmesser 20 im Quadrat und Pi. Entscheidend an vorliegender Erfindung ist nun, dass die Querschnittsfläche des Schachtes 7 wesentlich größer ist als die durch das Turbinenlaufrad 19 beanspruchte Querschnittsfläche. Dadurch ist die Fliessgeschwindigkeit des Wassers in der Rechenebene sehr gering und wird erst unmittelbar vor der Turbine 16 beschleunigt, wodurch einerseits die Schiebe- und Schwebegutbelastung des Schachtes 7 reduziert wird und zum anderen die Fische das Schachtkraftwerk 1 über die Klappe 23 ohne Turbinendurchgang passieren können.

Das Wasser fließt über die in den Fig. 16, 17 und 18 eingezeichnete Einlaufrichtung 29 von drei Seiten über die horizontale Einlaufebene 11 in den Schacht 7. Über den Leitapparat 18 wird das Wasser in horizontaler Richtung auf das Turbinenlaufrad 19 geleitet. Am Turbinenausgang fließt das Wasser über den Konus 25 und verlässt über den Saugschlauch 27 das Schachtkraftwerk 1 und fließt in das Unterwasser 6 ab. Die Rotationsbewegung im Turbinenlaufrad 19 wird über die elektrische Maschine 17 in elektrischen Strom gewandelt. Dabei sitzt die komplette Einheit 15 im Schacht 7 und somit komplett unter Wasser. Folglich ist keine weitere Kühlung der Einheit 15 nötig. Der erzeugte elektrische Strom wird über eine nicht dargestellte Kabelverbindung nach außen geführt.

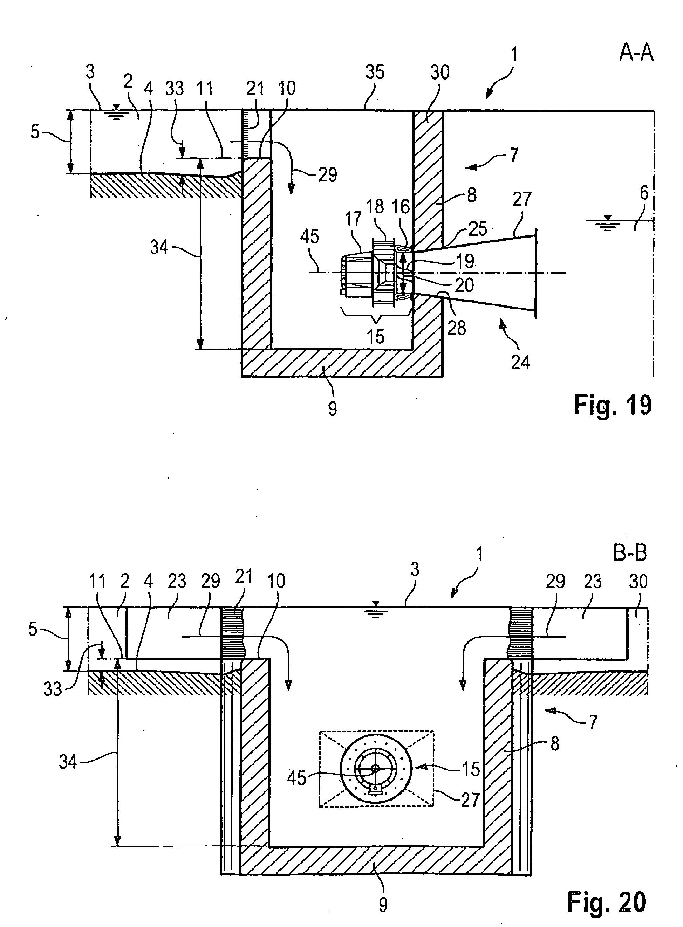

Die Fig. 19, 20, und 21 zeigen ein sechstes Ausführungsbeispiel des Schachtkraftwerks 1. Gleiche bzw. funktional gleiche Bauteile sind in allen Ausführungsbeispielen mit den gleichen Bezugszeichen beschrieben.

Im Gegensatz zum fünften Ausführungsbeispiel zeigt das sechste Ausführungsbeispiel eine Variante mit halbrundem, vertikalem Schacht 7 sowie vertikal angeordnetem Rechen 21.

In den Fig. 19 und 20 ist gut zu sehen, dass hier der Rechen 21 vertikal als Verlängerung der halbrunden vertikalen Seitenwand 8 des Schachtes 7 vorgesehen ist. Dabei erstrecken sich die Rechen 21 von der Schachtkrone 10 bis zumindest an den Oberwasserstand 3. Aus Sicherheitsgründen ist der komplette Schacht 7 ungefähr auf Höhe des Oberwasserstandes 3 mit der Abdeckung 35 verdeckt.

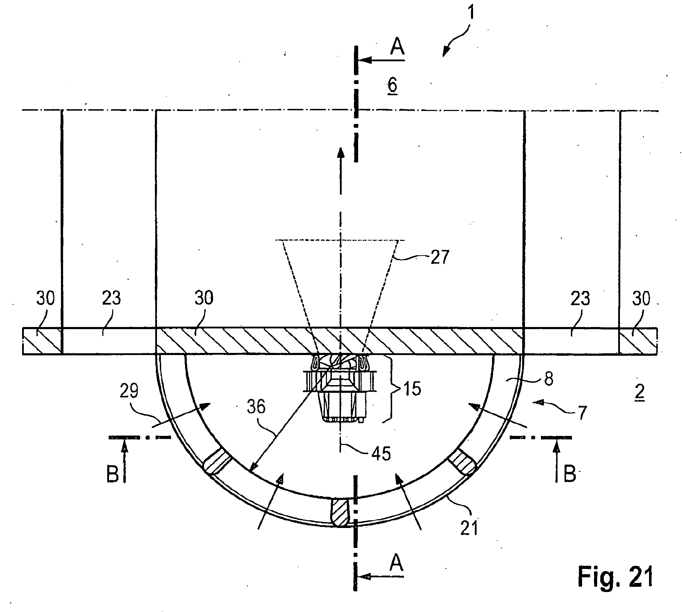

Die Fig. 21 zeigt die halbrunde Ausgestaltung des vertikalen Schachtes 7, wobei die gerade Seite des halbrunden Schachtes 7 mit dem Staubauwerk 30 vereint ist. Dies zeigt insbesondere Fig. 19, wonach die vertikale Seitenwand 8 exakt ab der horizontalen Einlaufebene 11 integral in das Staubauwerk 30 übergeht. Eine Querschnittsfläche (erste Querschnittsfläche) des Schachtes 7 definiert sich durch den Radius 36. Somit berechnet sich hier die Querschnittsfläche des Schachtes 7 zum Halben des Produktes aus Radius 36 im Quadrat und Pi.

Im sechsten Ausführungsbeispiel sind zwei Klappen 23 seitlich des Schachtes 7 vorgesehen. Das durch das Oberwasser 2 angetragene Geschiebe bleibt am Überstand 34 hängen und rutscht entlang dem Halbrund zu den Klappen 23. Dadurch wird vermieden, dass die Turbine 16 zu viel Geschiebe ansaugt.

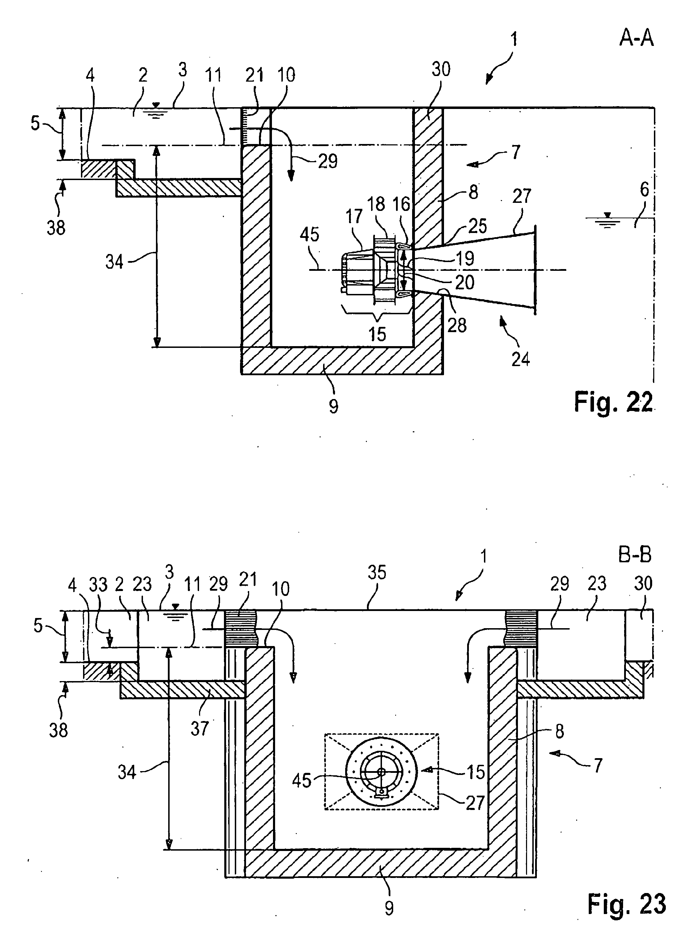

Die Fig. 22 bis 24 zeigen ein siebtes Ausführungsbeispiel des Schachtkraftwerks. Gleiche bzw. funktional gleiche Bauteile sind in allen Ausführungsbeispielen mit den gleichen Bezugszeichen bezeichnet.

Das siebte Ausführungsbeispiel ist genauso wie das sechste Ausführungsbeispiel mit einem halbrunden vertikalen Schacht 7, zwei seitlichen Klappen 23 und vertikal stehenden Rechen 21 mit horizontalen Stäben ausgeführt.

Als zusätzliches Merkmal ist im siebten Ausführungsbeispiel außerhalb des Schachtes 7 bzw. außerhalb der vertikalen Schachtwände 8 entlang des gesamten Halbrundes ein Spülkanal bzw. eine Spülrinne 37 ausgebildet. Diese Spülrinne 37 führt von einer Klappe 23 um den Schacht 7 herum zur anderen Klappe 23. Dabei liegt der Spülkanal 37 um eine Spülkanaltiefe 38 unterhalb der Oberwassersohlebene 4. Zum Auffangen des Geschiebes dient somit im siebten Ausführungsbeispiel nicht mehr nur der Überstand 33, sondern auch die Spülkanaltiefe 38. Bei Öffnen der Klappen 23 beidseitig des Schachtes 7 entsteht ein Spülstrom 39 in der Spülrinne 37 hin zu beiden Klappen 23.

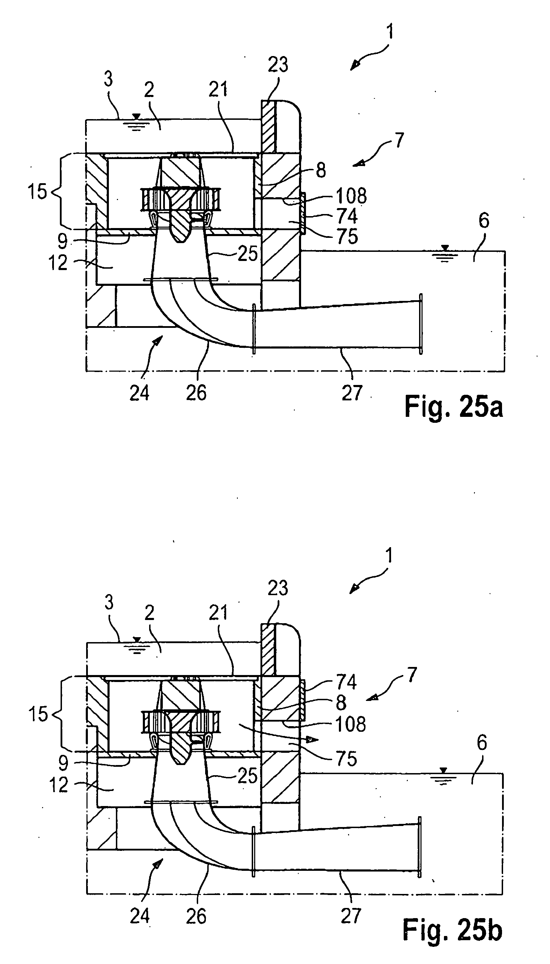

Die Fig. 25a und 25b zeigen ein achtes Ausführungsbeispiel des Schachtkraftwerks 1. Hier ist in der Schachtwandung 8, welche am Staubauwerk 30 anliegt, sowie im Staubauwerk 30 selbst eine Schachtspülöffnung 75 ausgebildet. Die Schachtspülöffnung 75 erstreckt sich in Form eines Durchbruchs 108 durch die Seitenwandung 8 und durch das Staubauwerk 30 hindurch. Eine Unterkante der Schachtspülöffnung 75 ist auf Höhe des Bodens 9 angeordnet. An der Außenseite der Schachtspülöffnung 75 befindet sich ein Schachtspülverschluss 74 in Form einer hydraulisch verfahrbaren Tafel. Die Schachtspülöffnung 75 ist hier so groß ausgebildet, dass sie nicht nur zum Spülen des Schachtes verwendet werden kann, sondern auch als Revisionszugang genutzt werden kann. Der Durchbruch 108 endet bevorzugt über dem mittleren Unterwasserstand, so dass der komplette Schachtinnenraum für den Revisionsfall trockengelegt werden kann.

Fig. 25b zeigt, wie der Schachtspülverschluss 74 zum Spülen nach oben verschoben werden kann.

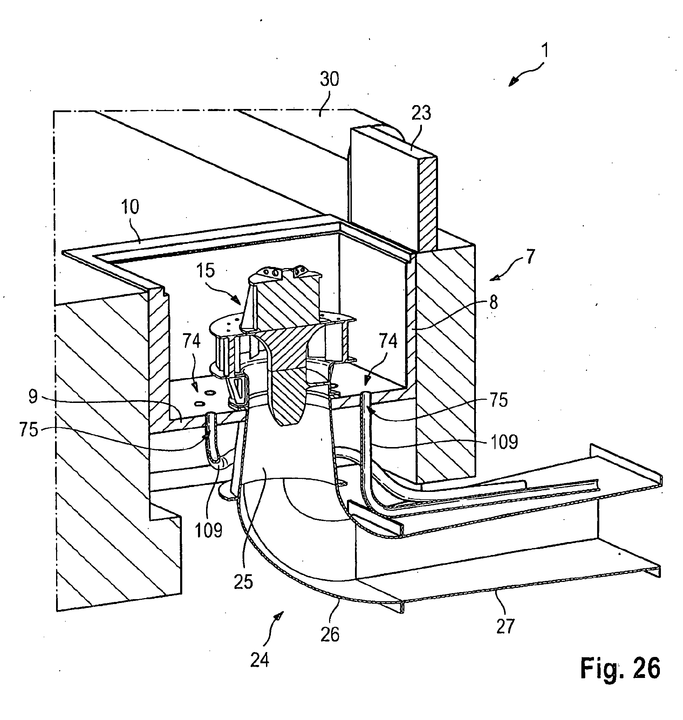

Fig. 26 zeigt eine zweite Variante der Schachtspülung als neuntes Ausführungsbeispiel. Die Schachtspülöffnungen 75 befinden sich hier im Boden 9. Diese Schachtspülöffnungen 75 sind ebenfalls mit Schachtspülverschlüssen 74 versehen. Von jeder der Schachtspülöffnungen 75 verläuft eine Rohrverbindung 109 direkt zum Unterwasser. Alternativ zu der dargestellten Variante können die Rohrverbindungen 109 auch im Abfluss 24 münden.

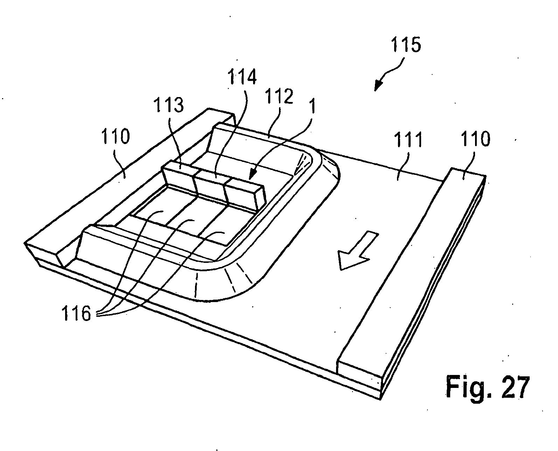

Anhand der Fig. 27 bis 29 wird gemäß einem zehnten Ausführungsbeispiel der modulare Aufbau der Erfindung mit einem Baukastensystem beschrieben. Fig. 27 zeigt schematisch die verschiedenen Module des Baukastens 115. Hierzu zählen ein Schachtkraftwerksmodul 1, wie es bereits in verschiedenen Ausführungen beschrieben wurde, ein Sperrenmodul 113 und ein Fischaufstiegsmodul 114. Bevorzugt wird der Baukasten 115 noch ergänzt durch ein Energieumwandlungsmodul 116. Die Fig. 27 zeigt schematisch ein Flussbett 111 sowie zwei gegenüberliegende Ufer 110. Vor dem Errichten der einzelnen Module wird der Fangedamm 112 aufgeschüttet. Je nach Bedarf werden dann Schachtkraftwerksmodule 1, Fischaufstiegsmodule 114 und Sperrenmodule 113 der benötigten Anzahl nebeneinander angeordnet, bis sich das Bauwerk von einem Ufer 110 zum gegenüberliegenden Ufer 110 erstreckt.

Wie bereits beschrieben, wird für das Schachtkraftwerksmodul 1 ein Schacht 7 benötigt. In ähnlicher Weise kann auch für das Sperrenmodul 113 ein Schacht verwendet werden. Eine der Schachtwandungen stellt dann das Staubauwerk 30 dar. Der Schachtinnenraum wird bevorzugt mit Ballast, insbesondere Beton, verfüllt. Auch für das Fischaufstiegsmodul 114 kann ein Schacht verwendet werden. Hier wird bevorzugt innerhalb des Schachtes der Fischaufstieg realisiert. Im Rahmen des elften Ausführungsbeispiels wird ein alternativer Fischaufstieg beschrieben. Die hier verwendeten Fischaufstiegsbecken werden außen, unterwasserseitig der Sperrenmodule 113 und Schachtkraftwerksmodule 1 aufgesetzt.

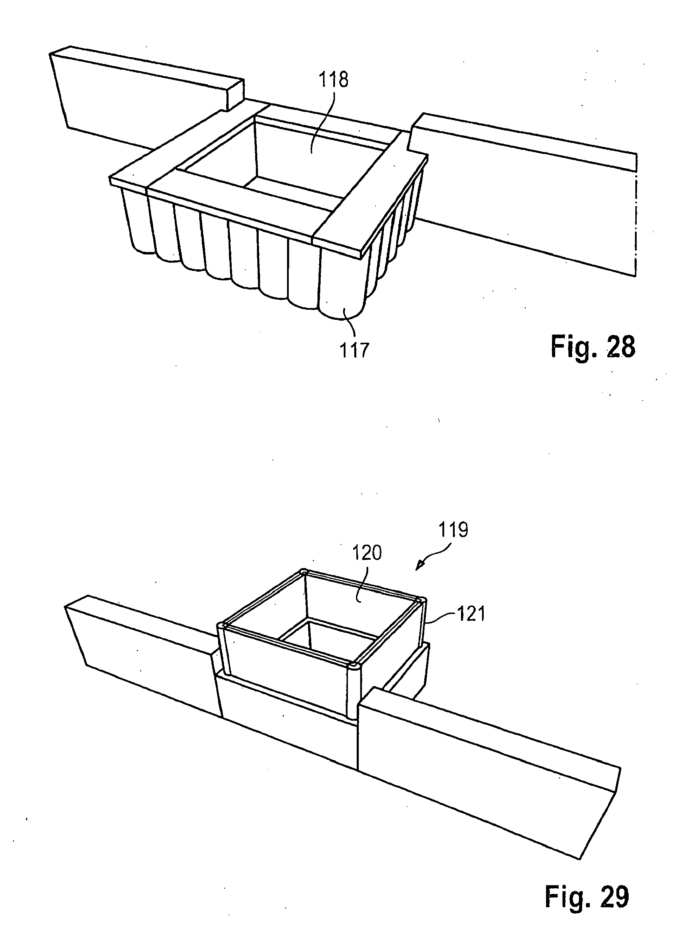

Fig. 28 zeigt, dass zunächst eine Wanne 117 erstellt wird. Diese Wanne 117 wird insbesondere mit überschnittenen Bohrpfahlwänden erstellt. In dem dadurch trockengelegten Innenraum wird eine Vorsatzschalung 118 eingesetzt. Der Zwischenraum zwischen der Wanne 117 und der Vorsatzschalung 118 wird mit Beton ausgefüllt.

Fig. 29 zeigt ein Revisionsmodul 119, bestehend aus einem Rahmen 121 und mehreren Planken 120. Bereits beim Bau der Kraftwerksanlage mittels des Baukastens 115 wird dieses Revisionsmodul 119 auf den Schacht 7 aufgesetzt. Dadurch ist der Schachtinnenraum trockengelegt und beispielsweise die Einheit 15 kann montiert werden. Zur Aufnahme des Rahmens 121 befinden sich entsprechende Schnittstellen zum Einstecken oder Aufstecken des Rahmens 121 auf der Schachtkrone 10. Alternativ zur dargestellten Ausführung können die Planken auch direkt auf die Stauplatten aufgesetzt werden. Auf den Planken wird dann bevorzugt ein mobiler Kran zur Montage aufgesetzt. Der Kran ist so ausgeführt, dass er von Schacht zu Schacht schreiten oder fahren kann.

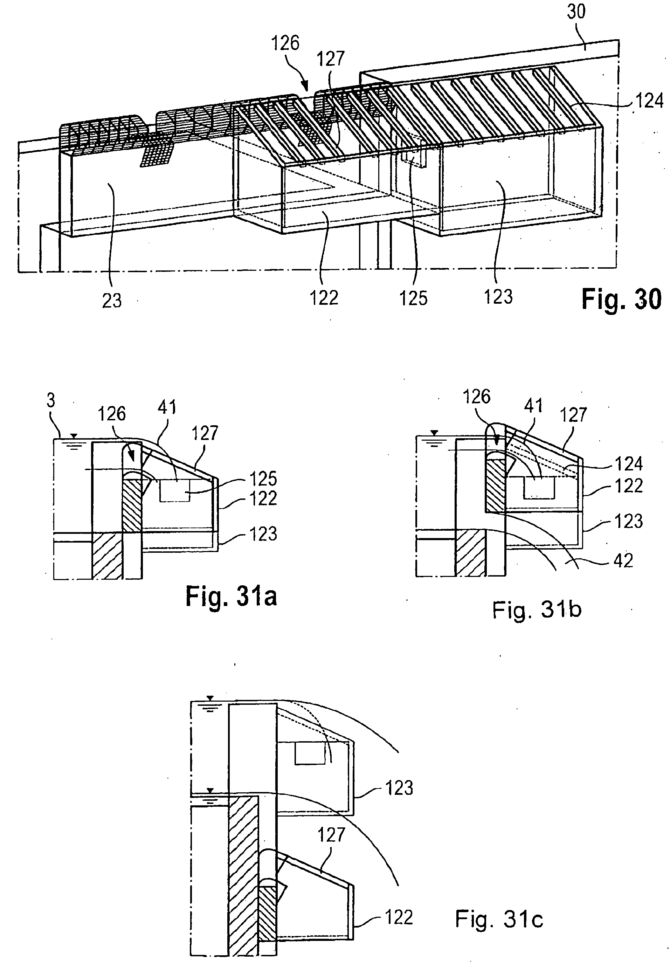

Fig. 30 bis 31c beschreiben anhand eines elften Ausführungsbeispiels, wie ein Fischaufstiegsmodul in Form mehrerer Becken außen an das Staubauwerk 30 und/oder das Sperrenmodul 113 und/oder das Schachtkraftwerksmodul 1 aufgesetzt werden kann. Fig. 30 zeigt ein Schachtkraftwerksmodul 1 mit dem Verschluss 23, ausgebildet als Schütz. Der Schütz 23 ist vertikal verfahrbar. Am Schütz befestigt, und somit mit dem Schütz verfahrbar, ist ein Ausstiegsbecken 122. Neben dem Schachtkraftwerksmodul 1 befindet sich ein Sperrenmodul 113. Dieses bildet einen Teil des Staubauwerks 30. An dem Staubauwerk 30 befindet sich ortsfest ein vorletztes Becken 123. Weitere Becken können sich stufenförmig an das vorletzte Becken 123 anschließen, bis das Unterwasser erreicht ist. Das Ausstiegsbecken 123 ist mit einem ersten Fischbeckenrechen 127 verschlossen. Das vorletzte Becken 123 ist mit einem zweiten Fischbeckenrechen 124 verschlossen. Zwischen den beiden Becken befindet sich ein Fischdurchlass 125. Die Krone des Schützes 23 ist zumindest teilweise eingekerbt. Durch diese Einkerbung 126 wird ein stetiger Wasserlauf in das Ausstiegsbecken 120 gewährleistet.

Fig. 31 a zeigt den Schütz 23 in Normalstellung. Hier läuft die Überströmung 41 stets in das Ausstiegsbecken 122. Fig. 31b zeigt den Spülvorgang der Rechenreinigung. Hier wird der Schütz 23 angehoben, so dass unter dem Schütz die Unterströmung 24 entsteht. Gleichzeitig mit dem Schütz 23 hebt sich auch das Ausstiegsbecken 122 sowie die Krone des Schützes. Damit auch hier ein stetiger Wasserlauf in das Ausstiegsbecken 122 gewährleistet ist, ist die Einkerbung 126 vorgesehen. Fig. 31c zeigt die Ansteuerung des Schützes 23 im Hochwasserfall. Hier ist der Schütz 23 komplett abgesenkt. Ein Fischausstieg ist hier nicht mehr möglich. Dies ist jedoch unschädlich, da bei extremen Hochwassersituationen kein Fischaufstieg stattfindet.

Es ist insbesondere darauf hinzuweisen, dass die verschiedenen Eigenschaften aller Ausführungsbeispiele kombiniert werden können. So ist in jedem der Ausführungsbeispiele sowohl eine horizontale als auch vertikale Rechenanordnung, eine runde oder vieleckige Schachtgeometrie, eine oder mehrere Klappen 23 und/oder eine Spülrinne 27 bevorzugt.

Die vorstehend beschriebenen Ausgestaltungen der erfindungsgemäßen Schachtspülung und des Schachtkraftwerks/Schachtkraftwerksmoduls, sowohl aus der allgemeinen Einleitung als auch aus der Figurenbeschreibung, können allesamt untereinander kombiniert werden. Insbesondere kommt die Schachtspülung mit den im Folgenden beschriebenen Vorrichtungen und vorteilhaften Ausgestaltungen zu Anwendung:
Ein nicht beanspruchtes Schachtkraftwerk/Schachtkraftwerksmodul stellt sich unter Berücksichtigung beider Varianten, der horizontalen und der vertikalen Anordnung der Einheit, wie folgt dar:
   a. Schachtkraftwerk (1) zur Stromerzeugung durch Energieumwandlung eines Abflusses zwischen Oberwasser (2) und Unterwasser (6), umfassend
      - einen vertikalen Schacht (7), dessen Schachtkrone (10) eine sohlparallele Einlaufebene (11) bildet, welche unterhalb des Wasserstandes (3) des Oberwassers verläuft, wobei der Schacht (7) nach oben offen ist und an seinem unteren Ende mit einem Boden (9) verschlossen ist,
      - eine Einheit (15) aus einer Turbine (16) und einer elektrischen Maschine (17), wobei die Einheit (15) komplett unter Wasser im Schacht (7) angeordnet ist, und wobei die Turbine (16) zum vertikalen oder horizontalen Wasserdurchlauf angeordnet ist, und
      - einen an die Turbine (16) angeschlossenen Ablauf (24), welcher einen geschlossenen Strömungskanal darstellt und durch einen Durchlass (28) im Schacht (7) zum Unterwasser (6) führt,
      - wobei bei vertikalem Wasserdurchlauf durch die Turbine (16) in einer horizontalen Ebene eines Turbinenlaufrades (19) der Turbine (16) eine erste Querschnittsfläche des Schachts (7) wesentlich größer ist als eine durch das Turbinenlaufrad (19) beanspruchte, zweite Querschnittsfläche, oder
         bei horizontalem Wasserdurchlauf durch die Turbine (16) eine horizontale erste Querschnittsfläche des Schachts (7) wesentlich größer ist als eine durch das Turbinenlaufrad (19) beanspruchte, vertikale zweite Querschnittsfläche.
   b. Schachtkraftwerk nach Punkt a, dadurch gekennzeichnet dass, die erste Querschnittsfläche um zumindest Faktor 1,5, insbesondere 5, insbesondere 10, insbesondere 30 größer ist als die zweite Querschnittsfläche.
   c. Schachtkraftwerk nach einem der vorhergehenden Punkte, dadurch gekennzeichnet, dass bei horizontaler Anordnung der Einheit (15) die erste Querschnittsfläche auf Höhe einer Turbinenachse (45) oder auf Höhe der Schachtkrone (10) definiert ist.
   d. Schachtkraftwerk nach einem der vorhergehenden Punkte, dadurch gekennzeichnet, dass die Schachtkrone (10) in der unteren Hälfte, insbesondere im unteren Drittel, einer Wassertiefe (5) des Oberwassers angeordnet ist.
   e. Schachtkraftwerk nach einem der vorhergehenden Punkte, dadurch gekennzeichnet, dass der Schacht (7) über seine komplette Oberseite offen ist.
   f. Schachtkraftwerk nach einem der vorhergehenden Punkte, dadurch gekennzeichnet, dass alle Seitenwände (8) des Schachts (7) vertikal verlaufen, so dass die erste Querschnittsfläche über die gesamte Schachttiefe (34) konstant ist. Die vertikalen Schachtwände können bevorzugt strömungsgünstig ausgestaltet sein und/oder strömungsgünstige Leitelemente umfassen. Alternativ bevorzugt ist eine Schachtform, die vom rechteckigen Einlaufquerschnitt mit einer strömungsoptimierten Wandung, z.B. spiralförmig und/oder mit kreisförmigem Querschnitt, zur Turbine führt.
   g. Schachtkraftwerk nach einem der vorhergehenden Punkte, dadurch gekennzeichnet, dass die Turbine (16), insbesondere das Turbinenlaufrad (19), unterhalb der Sohlebene (4) des Oberwassers angeordnet ist und/oder in der unteren Hälfte, insbesondere im unteren Drittel, des Schachts (7) angeordnet ist.
   h. Schachtkraftwerk nach einem der vorhergehenden Punkte, dadurch gekennzeichnet, dass die Turbinenachse (45) des Turbinenlaufrades (19) und eine Ankerachse der elektrischen Maschine (17) koaxial zueinander und vertikal oder horizontal angeordnet sind.
   i. Schachtkraftwerk nach einem der vorhergehenden Punkte, dadurch gekennzeichnet, dass sich der Ablauf (24) direkt im Anschluss an die Turbine (16), insbesondere stetig, aufweitet.
   j. Schachtkraftwerk nach einem der vorhergehenden Punkte, gekennzeichnet durch ein Staubauwerk (30) zwischen Oberwasser (2) und Unterwasser (6).
   k. Schachtkraftwerk nach Punkt j, dadurch gekennzeichnet, dass der Schacht (7) mit einem vieleckförmigen oder halbkreisförmigen Querschnitt ausgebildet ist, wobei eine Längsseite des Schachts (7) direkt am Staubauwerk (30) anliegt.
   l. Schachtkraftwerk nach einem der Punkte j oder k, dadurch gekennzeichnet, dass in dem Staubauwerk (30) zumindest eine permanent überströmte Klappe (23) angeordnet ist
   m. Schachtkraftwerk nach Punkt I, dadurch gekennzeichnet, dass die Klappe (23) zum Erweitern der Überströmung (41) und zum Öffnen einer Unterströmung (42) ausgebildet ist.
   n. Schachtkraftwerk nach einem der Punkte I oder m, dadurch gekennzeichnet, dass an einer Unterkante der Klappe (23) ein integrierter Verschluss (43) zur Regulierung der Unterströmung (42) angeordnet ist.
   o. Schachtkraftwerk nach einem der vorhergehenden Punkte, dadurch gekennzeichnet, dass bei einer vertikalen Anordnung der Einheit (15) der Ablauf (24), insbesondere um 90°, gekrümmt ist.
   p. Schachtkraftwerk nach einem der vorhergehenden Punkte, dadurch gekennzeichnet, dass der Boden (9) des Schachts (7) unterhalb der Sohlebene (4) des Oberwassers (2) angeordnet ist.
   q. Schachtkraftwerk nach einem der vorhergehenden Punkte, dadurch gekennzeichnet, dass bei der vertikalen Anordnung der Einheit (15) der Ablauf (24) nach der Turbine (16) in folgender Reihenfolge einen sich aufweitenden Konus (25), einen Krümmer und ein Saugrohr oder einen Saugschlauch (27) umfasst, und dass bei der horizontalen Anordnung der Einheit (15) der Ablauf (24) nach der Turbine (16) in folgender Reihenfolge einen sich aufweitenden Konus (25) und ein Saugrohr oder einen Saugschlauch (27) umfasst.
   r. Schachtkraftwerk nach einem der vorhergehenden Punkte, dadurch gekennzeichnet, dass bei der vertikalen Anordnung der Einheit (15) der Ablauf (24) über dem Turbinenlaufrad (19) angeordnet ist, so dass bei Stromerzeugung das Wasser das Turbinenlaufrad (19) von unten nach oben durchströmt.
   s. Schachtkraftwerk nach Punkt r, dadurch gekennzeichnet, dass sich der Ablauf (24) durch eine Seitenwand (8) des Schachts (7) hindurch zum Unterwasser (6) erstreckt.
   t. Schachtkraftwerk nach einem der vorhergehenden Punkte, dadurch gekennzeichnet, dass bei der vertikalen Anordnung der Einheit (15) der Ablauf (24) unter dem Turbinenlaufrad (19) angeordnet ist, so dass bei Stromerzeugung das Wasser das Turbinenlaufrad (19) von oben nach unten durchströmt.
   u. Schachtkraftwerk nach einem der vorhergehenden Punkte, dadurch gekennzeichnet, dass bei der horizontalen Anordnung der Einheit (15) die Einheit (15) direkt an eine Seitenwand (8) des Schachts (7) montiert ist und sich der Ablauf (24) durch die Seitenwand (8) hindurch zum Unterwasser (6) erstreckt.
   v. Schachtkraftwerk nach einem der vorhergehenden Punkte, dadurch gekennzeichnet, dass bei der horizontaler Anordnung der Einheit (15) der Ablauf (24) seitlich des Turbinenlaufrads (19) angeordnet ist, so dass bei Stromerzeugung das Wasser das Turbinenlaufrad (19) horizontal durchströmt.
   w. Schachtkraftwerk nach Punkt t, dadurch gekennzeichnet, dass bei der vertikalen Anordnung der Einheit (15) sich der Ablauf (24) durch den Boden (9) des Schachts (7) hindurch zum Unterwasser (6) erstreckt.
   x. Schachtkraftwerk nach einem der Punkte t oder w, dadurch gekennzeichnet, dass bei der vertikalen Anordnung der Einheit (15) der Schacht (7) unterhalb des Bodens (9) zu einem Hohlraum ausgebildet ist, wobei der Boden (9) des Schachts (7) eine Decke des Hohlraums bildet, und wobei sich der Ablauf (24) durch die Decke, den Hohlraum und eine Seitenwand des Hohlraums bis zum Unterwasser (6) erstreckt.
   y. Schachtkraftwerk nach einem der vorhergehenden Punkte, dadurch gekennzeichnet, dass ein Einlauf (29) in den Schacht (7) mit einer horizontalen Rechenebene (21), oder einer vertikalen Rechenebene (21), insbesondere mit einer horizontalen Abdeckung (35) über dem Schacht (7), versehen ist.
   z. Schachtkraftwerk nach einem der Punkte p bis y, dadurch gekennzeichnet, dass um den Schacht (7) eine tiefer als die Schachtkrone (10) und tiefer als die Sohlebene (4) des Oberwassers (2) liegende Spülrinne (37) verläuft, wobei die Spülrinne (37) bis zur Klappe (23) führt und die Unterkante der Klappe (23) auf Höhe der Spülrinne (37) angeordnet ist.
   aa. Schachtkraftwerk nach einem der Punkte a bis o, dadurch gekennzeichnet, dass der Boden (9) des Schachts (7) oberhalb der Sohlebene (4) des Oberwassers (2) angeordnet ist.
   bb. Schachtkraftwerk nach Punkt aa, dadurch gekennzeichnet, dass der Ablauf (24) einen zylindrischen Durchlauf mit konstantem Querschnitt durch das Staubauwerk (30) umfasst.
   cc. Schachtkraftwerksmodul zur Stromerzeugung durch Energieumwandlung eines Abflusses zwischen Oberwasser (2) und Unterwasser (6), umfassend
      - ein vertikales Schachtmodul (7), dessen Schachtkrone (10) eine sohlparallele Einlaufebene (11) bildet, welche dazu ausgebildet ist, um unterhalb des Wasserstands (3) des Oberwassers zu verlaufen, wobei das Schachtmodul (7) nach oben offen ist und an seinem unteren Ende mit einem Boden (9) verschlossen ist,
      - ein Einheitenmodul (15) aus einer Turbine (16) und einer elektrischen Maschine (17), wobei das Einheitenmodul (15) zur Anordnung komplett unter Wasser im Schachtmodul (7) ausgebildet ist, und wobei die Turbine (16) zur Anordnung mit vertikalem oder horizontalem Wasserdurchlauf ausgebildet ist,
         und
      - ein an die Turbine (16) anzuschließendes Ablaufmodul (24), welches einen geschlossenen Strömungskanal darstellt und dazu ausgebildet ist, um durch einen Durchlass (28) im Schachtmodul (7) zum Unterwasser (6) zu führen,
      - wobei bei vertikalem Wasserdurchlauf durch die Turbine (16) in einer horizontalen Ebene eines Turbinenlaufrades (19) der Turbine (16) eine erste Querschnittsfläche des Schachtmoduls (7) wesentlich größer ist als eine durch das Turbinenlaufrad (19) beanspruchte, zweite Querschnittsfläche, oder bei horizontalem Wasserdurchlauf durch die Turbine (16) eine horizontale erste Querschnittsfläche des Schachtmoduls (7) wesentlich größer ist als eine durch das Turbinenlaufrad (19) beanspruchte, vertikale zweite Querschnittsfläche.

Ferner sei beschrieben folgendes nicht beanspruchtes Baukastensystem und Verfahren zum Aufbau eines Wasserkraftwerks mit integriertem Staubauwerk. Hier wird das vorab beschriebene Schachtkraftwerk/Schachtkraftwerksmodul 1 bevorzugt mit zumindest einem Sperrenmodul 113 und/oder Fischaufstiegsmodul 114 kombiniert.
I. Baukastensystem (115) für ein Wasserkraftwerk mit mehreren Modulen umfassend
   zumindest ein Schachtkraftwerksmodul (1) nach einer der vorab beschriebene Ausgestaltungen des Schachtkraftwerks, wobei eine Seitenwandung (8) des Schachtkraftwerks (1) als Staubauwerk (30) mit oder ohne Verschluss (23) ausgebildet ist, und
   zumindest ein Sperrenmodul (113), wobei eine Seite des Sperrenmoduls (113) als Staubauwerk (30) ausgebildet ist.
II. Baukastensystem nach Punkt I, dadurch gekennzeichnet, dass die Module untereinander verzahnt sind.
III. Baukastensystem nach einem der vorhergehenden Punkte, dadurch gekennzeichnet, dass das Sperrenmodule (113) als mit Ballast, insbesondere Beton, verfüllter Schacht ausgebildet ist.
IV. Baukastensystem nach einem der vorhergehenden Punkte, gekennzeichnet durch zumindest ein Fischaufstiegsmodul (114), wobei eine Seite des Fischaufstiegsmoduls (114) als Staubauwerk (30) ausgebildet ist.
V. Baukastensystem nach Punkt IV, dadurch gekennzeichnet, dass das Fischaufstiegsmodul (14) als Schacht mit einer Lichtöffnung im Zentrum und mehreren stufenförmig angeordneten Becken an den Innenwänden des Schachts ausgebildet ist.
VI. Baukastensystem nach Punkt IV, dadurch gekennzeichnet, dass das Fischaufstiegsmodul (114) als Schacht mit einem senkrechten Kern im Zentrum und mehreren stufenförmig angeordneten Becken um den Kern herum ausgebildet ist.
VII. Baukastensystem nach Punkt IV, dadurch gekennzeichnet, dass eine dem Unterwasser zugewandte Außenseite des Fischaufstiegsmoduls (114) zum Fischaufstieg ausgebildet ist.
VIII. Baukastensystem nach einem der vorhergehenden Punkte, gekennzeichnet durch zumindest ein zum Aufsetzen und Abdichten ausgebildetes Revisionsmodul (119), wobei das Schachtkraftwerksmodul (1) und/oder das Sperrenmodul (113) und/oder das Fischaufstiegsmodul (114) Schnittstellen, insbesondere Ein- oder Aufsteckelemente, zum Aufsetzen des Revisionsmoduls umfassen.
IX. Baukastensystem nach einem der vorhergehenden Punkte, dadurch gekennzeichnet, dass das Schachtkraftwerksmodul (1) und/oder das Sperrenmodul (113) und/oder das Fischaufstiegsmodul (114) auf der dem Unterwasser (6) zugewandten Außenseite Energieumwandlungselemente umfassen, oder, dass das Baukastensystem (115) zumindest ein Energieumwandlungsmodul (116) zur unterwasserseitigen Anordnung am Schachtkraftwerksmodul (1) und/oder Sperrenmodul (113) und/oder Fischaufstiegsmoduls (114) umfasst, wobei die Energieumwandlungselemente und das Energieumwandlungsmodul (116) zur Energieumwandlung der Überfallströmung ausgebildet sind.
X. Verfahren zum Bau des Schachtes (7) für das Schachtkraftwerksmodul (1) nach einer der vorab beschriebenen Ausgestaltungen, und/oder für das Sperrenmodul (113) und/oder für das Fischaufstiegsmodul (114), umfassend die folgenden Schritte:
   Errichten einer wasserdichten Wanne (117) entsprechend der Form des zu bauenden Schachts (7) und mit Aufmaß zu dem zu bauenden Schacht (7), Errichten einer Betonsohle in der Wanne (117), Einsetzen einer Vorsatzschalung (118) in die Wanne (117), Ausbetonieren des Zwischenraums zwischen Vorsatzschalung (118) und Wanne (117).
XI. Verfahren nach Punkt X, gekennzeichnet durch eine Abdichtung und/oder Tiefgründung der Betonsohle.
XII. Verfahren nach einem der Punkte X oder XI, dadurch gekennzeichnet, dass Schachtkraftwerksmodule (1) und/oder Sperrenmodule (113) und/oder Fischaufstiegsmodul (114) von einem Ufer zum gegenüberliegenden Ufer schrittweise aneinander gesetzt werden.
XIII. Verfahren nach einem der Punkte X bis XII, gekennzeichnet durch Errichten eines Fangedamms (112), bevor die Wanne (117) errichtet wird.

Die Basis des Baukastensystems bildet das Schachtkraftwerksmodul. Bei einem noch nicht bestehenden Staubauwerk bzw. bei einem unvollständigen Staubauwerk wird das Schachtkraftwerksmodul mit entsprechenden Sperrenmodulen ergänzt. Diese beiden Modularten werden stets nebeneinander angeordnet. Um des Weiteren einen ökologisch verträglichen Fischaufstieg zu ermöglichen, wird das System mit dem Fischaufstiegsmodul ergänzt. Das Revisionsmodul kommt sowohl bei der Errichtung der Kraftwerksanlage als auch im Revisionsfall zum Einsatz.

Entsprechend den geologischen Gegebenheiten werden Untergrundabdichtungen und gegebenenfalls dichte Anbindungen an Stauhaltungsdämme mit üblichen Techniken durchgeführt.

Für das Schachtkraftwerksmodul wird stets ein oben offener Schacht benötigt. Ein sehr ähnlicher Schacht kann auch für das Sperrenmodul oder das Fischaufstiegsmodul verwendet werden. In allen drei Modulen bildet stets eine Seitenwandung des Schachtes das Staubauwerk. Insbesondere werden zur Errichtung der Schächte folgende Verfahrensschritte vorgenommen: Zunächst wird ein Fangedamm zur Abflussumlenkung vor und nach der Baustelle sowie als Arbeitsplattform aufgeschüttet. Daraufhin wird eine wasserdichte Wanne im Bereich des zu errichtenden Schachtes aufgestellt. Dies erfolgt insbesondere mit überschnittenen Bohrpfahlwänden, Spundwänden, Schlitzwänden oder ähnlichen Verbauarten rings um den späteren Schacht. Den Boden der Wanne bildet eine Betonsohle. Die Betonsohle wird insbesondere abgedichtet und es erfolgt bevorzugt eine Tiefgründung im Bereich der verschiedenen Module und Tosbecken. Dies erfolgt, falls nötig, mittels Hochdruckinjektionen. Der Bauablauf beginnt an einem Ufer und setzt sich schrittweise, mit einem Modul neben dem anderen, zum gegenüberliegenden Ufer fort. An geeigneter Stelle wird der Flusslauf, der dadurch eingeengt wurde, auf den bereits fertiggestellten Bereich übergeleitet, um das Bauwerk im Trockenen an das gegenüberliegende Ufer anzuschließen.

Zum Ausbetonieren der Schächte wird innerhalb der Wanne, insbesondere innerhalb des Bohrpfahlkastens, eine saubere Innenwand, zum Beispiel durch Vorsatzschalung hergestellt. Zur Gewährleistung einer trockenen Umgebung für die Innenarbeiten im Schacht, wird bereits hier das Revisionsmodul eingesetzt. Dadurch können insbesondere für das Schachtkraftwerksmodul die Saugrohre und weiteren Einbauten in einer trockenen Baugrube erstellt werden. Direkt neben das Schachtkraftwerksmodul kann entweder ein weiteres Schachtkraftwerksmodul angeordnet werden, oder es folgt ein Sperrenmodul oder Fischaufstiegsmodul.

Das Sperrenmodul dient zur Bildung eines Staukörpers bzw. des Staubauwerkes und kann aus einem regulierbaren und/oder unregulierbaren Staubauwerk bestehen. Es werden in der Regel mehrere Sperrenmodule nebeneinander errichtet, um das Gerinne aufzustauen. Die einzelnen Module sind dabei insbesondere ineinander verzahnt ausgeführt, um einen besseren Verbund herzustellen. Das Sperrenmodul ist in der Wahl des Baustoffes frei gestaltbar. Es kann beispielsweise aus Natursteinen bestehen. Ebenfalls verwendbar sind insbesondere Beton, Stahl, Holz oder kombinierte Materialien. Im Fall von Beton als Baustoff können die Sperrenmodule je nach benötigter Größe als Fertigteile oder als halbfertige Kästen, die vor Ort mit. Beton verfüllt werden, eingebracht werden. Als Überlaufkante sind konventionelle Regulierungen, ein Schlauchwehr oder eine feste Überfallkrone bevorzugt vorgesehen. Bei bereits bestehenden Staubauwerken können die erfindungsgemäßen Sperrenmodule oder Teile daraus angebracht werden, um einen weiteren Aufstau und/oder eine Regulierungsmöglichkeit zu schaffen.

Die äußere Form der Sperrenmodule kann frei gestaltet und an die Umgebung angepasst werden. Eine bevorzugte Lösung ist dabei die Ausgestaltung als "Stepped Spillway", also als getreppter Abfluss, um eine Energieumwandlung bereits auf dem Rücken des Sperrenmoduls zu ermöglichen. Das Fischaufstiegsmodul kann ebenfalls formgebende Elemente zum Fischaufstieg auf einer dem Unterwasser zugewandten Seite umfassen. In diesem Fall stellt die getreppte Ausbildung der Sperrenmodule zusammen mit dem Fischaufstiegsmodul ein einheitliches Bild dar. Ferner können im "Stepped Spillway" des Sperrenmoduls Elmente für den Fischauf- und/oder -abstieg integriert sein.

Zur Energieumwandlung der Überfallströmung sind entweder die dem Unterwasser zugewandten Seiten der Module mit Energieumwandlungselementen, wie dem oben beschriebenen "Stepped Spillway", ausgebildet. Alternativ können auch Energieumwandlungsmodule auf der Unterwasserseite des Schachtkraftwerksmoduls, Sperrenmoduls oder Fischaufstiegsmoduls angeordnet sein. Dies ermöglicht eine gezielte Energieumwandlung im Anschluss an das Staubauwerk bzw. im Anschluss an die Module. Bevorzugt sind hier vorgefertigte Energieumwandlungsanlagen aus Wasserbausteinen, Holz, Stahl und/oder Beton vorzusehen. Die Energieumwandlung kann bevorzugt mit losen Elementen durchgeführt werden. Bevorzugt sind hier vorgefertigte Energieumwandlungsanlagen aus Wasserbausteinen, Holz, Stahl und/oder Beton vorzusehen. Zusätzlich oder alternativ werden lose angeordnete Wasserbausteine und/oder Stahl- oder Betonelemente (z.B. Tetrapoden) verwendet.

Für das Fischaufstiegsmodul sind mehrere bevorzugte Varianten vorgesehen. All diese Varianten ermöglichen eine ökologische Durchgängigkeit der Anlage für Fische:

In einer ersten Variante wird das Fischaufstiegsmodul in einem Schacht integriert. Der Schacht umfasst in seinem Zentrum eine Lichtöffnung. Entsprechende stufenartig angeordnete Becken für den Fischaufstieg sind wendeltreppenartig an den Innenwandungen des Schachtes angeordnet. Die Becken bzw. Stufen haben statisch wirksame Auflager.

Alternativ hierzu kann der Schacht des Fischaufstiegsmoduls auch einen festen vertikalen Kern umfassen. Die einzelnen Becken bzw. Stufen sind rings um diesen Kern angeordnet.

In einer weiteren Alternative befindet sich der Fischaufstieg am Rücken des Fischaufstiegmoduls, das heißt auf der dem Unterwasser zugewandten Seite des Staubauwerks. Hier sind die verschiedenen Becken bzw. Stufen der Fischtreppe am Rücken des Moduls angeordnet.

In einer weiteren Ausbildung ist der Fischaufstieg gebildet durch mehrere Becken, die an der dem Unterwasser zugeordneten Seite des Staubauwerks angeordnet sind. Diese Becken können sich sowohl am Sperrenmodul als auch am Schachkraftwerksmodul befinden. Das Fischaufstiegsmodul ist hiermit als ein Aufsatz, bestehend aus mehreren Becken, auf Schachtkraftwerksmodul und/oder Sperrenmodul ausgebildet. Das Fischaufstiegsmodul umfasst hierzu zumindest zwei Becken, ein Becken für den Einstieg der Fische am Unterwasser und ein Ausstiegsbecken. Zwischen dem Einstiegsbecken und dem Ausstiegsbecken können weitere Becken angeordnet sein, so dass die Fische über mehrere Becken hinweg bis zum Ausstiegsbecken aufsteigen können. Das Ausstiegsbecken ist bevorzugt an einem vertikal verschiebbaren Schütz angeordnet. Das bedeutet, dass mit dem Ein- und Ausfahren des Schützes sich auch das Ausstiegsbecken anhebt oder senkt. Hier wird die Verschlussüberströmung, welche über den Schütz fließt, zur Versorgung der Fischtreppe benutzt. Dadurch wird der Abfluss ökonomisiert und die automatische Verschlussregulierung bezüglich des Oberwasserstandes gewährleistet eine adäquate Wasserversorgung und damit Funktion des Fischaufstiegsmoduls bzw. der Fischtreppe. Darüber hinaus erlaubt die Bauform des Schachtkraftwerks durch geeignete Ausführung des Fischtreppenverlaufes bzw. durch geeignete Ausführung der einzelnen Becken die Positionierung des untersten Beckens in Nähe des Saugschlauchendes. Die Hauptströmung der Kraftwerksanlage fungiert somit als Lockströmung und die Auffindbarkeit der Fischaufstiegsanlage wird begünstigt. Die konkrete Ausführung des Fischtreppenverlaufes bzw. die Anordnung der einzelnen Becken erfolgt flexibel, entsprechend den gängigen Techniken und den jeweiligen Gegebenheiten und Anforderungen bezüglich Fallhöhe, Zielfischgruppe sowie baulichen und ästhetischen Anforderungen.

Kritischer Aspekt ist hierbei die Anbindung des Fischaufstiegsmoduls an das Oberwasser. Um die Speisung durch die Verschlussüberströmung zu erreichen und um zu verhindern, dass Rechenreinigungsgut beim Spülen in den Fischaufstieg gelangt, wird das Ausstiegsbecken an der Schützentafel montiert. Die adäquate Verbindung zum Oberwasser erfolgt über eine Einkerbung in der Schützkrone. Beim Spülvorgang eines Rechens wird die Schützentafel angehoben. Dadurch entsteht eine Unterströmung unterhalb der Schützentafel. Gleichzeitig wird das Ausstiegsbecken mit angehoben. Dank der Einkerbung in der Schützkrone erfolgt aber weiterhin eine Wasserversorgung, die ein Trockenfallen der Fischtreppe verhindert. Im Hochwasserfall werden der Verschluss und damit das Ausstiegsbecken so weit abgesenkt, dass der Überfallstrahl über das Becken hinweggeht. Durch die Überströmung des gesamten Wehrkörpers ist jedoch auch im Hochwasserfall ein Trockenfallen der Fischtreppe ausgeschlossen. Im Hochwasserfall ist zwar der Ausstieg aus dem Ausstiegsbecken nicht möglich, dies ist jedoch unerheblich, da die Fische bei diesen Verhältnissen nicht flussaufwärts wandern. Sediment, das eventuell in das abgesenkte Ausstiegsbecken fallen kann, wird durch die einseitig geöffnete Ausführung des Beckens und eine entsprechende Neigung des Bodens des Beckens wieder ausgespült. In die übrigen Becken kann kein Sediment gelangen, da der Geschiebetransport über den Bereich des versenkten Verschlusses erfolgt, wo sich lediglich das Ausstiegsbecken befindet. Darüber hinaus sind das Ausstiegsbecken und alle weiteren Becken des Fischaufstiegsmoduls, die im Bereich des Wehrüberfalls liegen, bevorzugt mit Rechenstäben, in Fließrichtung orientiert und zum Unterwasser hin abfallend, gegen Oberflächentreibgut geschützt. Somit werden natürliche Lichtverhältnisse erreicht und es wird verhindert, dass größeres Treibgut in die Becken gelangt.

Bei Anlagen mit geringem Bemessungsabfluss und entsprechend geringer Verschlussüberströmung ist bei Umsetzung des Fischaufstieges gegebenenfalls der Abflussanteil der Verschlussüberströmung über das für die Kraftwerkshydraulik notwendige Maß zu erhöhen, um eine ausreichende Wasserzufuhr für die Fischtreppe zu gewährleisten. Bei Anlagen größeren Bemessungsabflusses, bei denen die Verschlussüberströmung den für den Fischaufstieg notwendigen Abfluss übersteigt, ist das am Verschluss angebrachte oberste Becken (Ausstiegsbecken), über das die Wasserversorgung erfolgt, nicht über die gesamte Verschlussbreite auszuführen, sondern so zu begrenzen, dass nur der für die Fischtreppenhydraulik angemessene Anteil der Verschlussüberströmung abgegriffen wird. Der restliche Abflussanteil der Verschlussüberströmung geht wie beim Schachtkraftwerk ohne Fischaufstieg direkt in das Unterwasser, wo ein Wasserpolster die Unversehrtheit der absteigenden Fische sicherstellt. Abwandernde Fische, die über die Verschlussüberströmung in das oberste Becken des Fischpasses gelangen, können im Fischpass absteigen. Bei Großanlagen kann des Weiteren zu beiden Seiten des Verschlusses ein Fischpass mit entsprechenden Zugangsbecken an der Schützentafel installiert werden.

## Patentansprüche

1. Schachtkraftwerk (1) zur Stromerzeugung durch Energieumwandlung eines Abflusses zwischen Oberwasser (2) und Unterwasser (6), umfassend
- einen vertikalen Schacht (7), dessen Schachtkrone (10) eine Einlaufebene (11) bildet, welche bei bestimmungsgemäßer Nutzung des Schachtkraftwerks (1) unterhalb des Wasserstandes (3) des Oberwassers verläuft, wobei der Schacht (7) nach oben offen ist und an seinem unteren Ende mit einem Boden (9) verschlossen ist,
- eine Einheit (15) aus einer Turbine (16) und einer elektrischen Maschine (17), wobei die Einheit (15) welche bei bestimmungsgemäßer Nutzung des Schachtkraftwerks (1) komplett unter Wasser im Schacht (7) angeordnet ist, und wobei die Turbine (16) zum vertikalen oder geneigten oder horizontalen Wasserdurchlauf angeordnet ist,
- einen an die Turbine (16) angeschlossenen Ablauf (24), welcher einen geschlossenen Strömungskanal darstellt und durch einen Durchlass (28) im Schacht (7) zum Unterwasser (6) führt, und
- zumindest eine verschließbare Schachtspülöffnung (75) im Schacht (7) auf einer turbinenzugewandten Seite eines Rechens (21) des Schachtkraftwerks (1) zum Ausspülen von Ablagerungen im Schacht, wobei die Schachtspülöffnung (75) unter Umgehung der Turbine (16) zum Unterwasser führt (6), **dadurch gekennzeichnet, dass**
die Schachtspülöffnung (75) in einer Seitenwandung (8) des Schachtes (7), insbesondere bündig mit dem Boden (9), angeordnet ist, oder dass
die Schachtspülöffnung (75) im Boden (9) angeordnet ist.

2. Schachtkraftwerk nach Anspruch 1, umfassend einen integrierten Schachtspülverschluss, wobei die Schachtspülöffnung (75) mittels des integrierten Schachtspülverschlusses (74) verschließbar ist.

3. Schachtkraftwerk nach Anspruch 2, **dadurch gekennzeichnet, dass** der Schachtspülverschluss (74) motorisch antreibbar oder als an- und abschraubbarer Deckel ausgeführt ist.

4. Schachtkraftwerk nach einem der vorhergehenden Ansprüche, **dadurch gekennzeichnet, dass** die Schachtspülöffnung (75) als Durchbruch (108), insbesondere als Revisionszugang zum Schacht (7), ausgebildet ist, wenn die Schachtspülöffnung (75) in der Seitenwandung (8) angeordnet ist.

5. Schachtkraftwerk nach einem der Ansprüche 1-3, **gekennzeichnet durch** eine Rohrverbindung (109), die direkt von der Schachtspülöffnung (75) zum Unterwasser (6) führt, wenn die Schachtspülöffnung (75) im Boden (9) angeordnet ist.

6. Schachtkraftwerk nach Anspruch 5, **gekennzeichnet durch** eine Rohrverbindung, die von der Schachtspülöffnung (75) in den Ablauf (24) führt.

## Claims

1. A shaft power plant (1) for power generation by way of energy conversion of an outflow between upstream water (2) and downstream water (6), comprising
- a vertical shaft (7), the shaft crown (10) of which forms an inlet plane (11) which, when the shaft power plant (1) is used according to the intended purpose, extends underneath the water level (3) of the upstream water, the shaft (7) being open upwards and closed at its lower end with a bottom (9),
- a unit (15) consisting of a turbine (16) and an electric machine (17), the unit (15) being completely arranged under water in the shaft (7) when the shaft power plant (1) is used according to the intended purpose, and the turbine (15) being arranged for vertical or inclined or horizontal water passage,
- an outlet (24) connected to the turbine (16), which represents a closed flow channel and leads through a passage (28) in the shaft (7) to the downstream water (6), and
- at least one closable shaft flush port (75) in the shaft (7) at a turbine-facing side of a rake (21) of the shaft power plant (1) for flushing out deposits in the shaft, the shaft flush port (75) leading to the downstream water (6) by bypassing the turbine (16), **characterized in that**
the shaft flush port (75) is arranged in a sidewall (8) of the shaft (7), particularly flush with the bottom (9), or that
the shaft flush port (75) is arranged in the bottom (9).

2. The shaft power plant according to claim 1, comprising an integrated shaft flush closure (74), wherein the shaft flush port (75) is closable by means of the integrated shaft flush closure (74).

3. The shaft power plant according to claim 2, **characterized in that** the shaft flush closure (74) is drivable by a motor or is configured as a screw-on and screw-off cap.

4. The shaft power plant according to any one of the preceding claims, **characterized in that** the shaft flush port (75) is configured as a breakthrough (108), particularly as inspection access to the shaft (7) when the shaft flush port (75) is arranged in the sidewall (8).

5. The shaft power plant according to any one of claims 1 to 3, **characterized by** a pipe connection (10) which directly leads from the shaft flush port (75) to the downstream water (6) when the shaft flush port (75) is arranged in the bottom (9).

6. The shaft power plant according to claim 5, **characterized by** a pipe connection which leads from the shaft flush port (75) into the outlet (24).

## Revendications

1. Centrale électrique à puits (1) pour la production de courant par conversion d'énergie d'un écoulement entre de l'eau d'amont (2) et de l'eau d'aval (6), comprenant
- un puits vertical (7), dont la couronne de puits (10) forme un plan d'afflux (11) qui se trouve, en cas d'utilisation conforme aux dispositions de la centrale électrique à puits (1), en dessous du niveau d'eau (3) de l'eau d'amont, le puits (7) étant ouvert vers le haut et étant fermé à son extrémité inférieure par un fond (9),
- une unité (15) composée d'une turbine (16) et d'une machine électrique (17), l'unité (15) étant complètement agencée sous l'eau dans le puits (7) en cas d'utilisation conforme aux dispositions de la centrale électrique à puits (1), et la turbine (16) étant agencée pour le passage de l'eau vertical ou incliné ou horizontal,
- une évacuation (24) raccordée à la turbine (16) qui représente un canal d'écoulement fermé et mène par le biais d'un passage (28) dans le puits (7) à l'eau d'aval (6), et
- au moins une ouverture de rinçage de puits (75) refermable dans le puits (7) sur un côté tourné vers la turbine d'une grille de retenue (21) de la centrale électrique à puits (1) pour l'enlèvement de dépôts dans le puits, l'ouverture de rinçage de puits (75) menant en contournant la turbine (16) à l'eau d'aval (6), **caractérisée en ce que**
l'ouverture de rinçage de puits (75) est agencée dans une paroi latérale (8) du puits (7), en particulier à fleur avec le fond (9), ou **en ce que**
l'ouverture de rinçage de puits (75) est agencée dans le fond (9).

2. Centrale électrique à puits selon la revendication 1, comprenant une fermeture de rinçage de puits (74) intégrée, l'ouverture de rinçage de puits (75) étant refermable à l'aide de la fermeture de rinçage de puits (74) intégrée.

3. Centrale électrique à puits selon la revendication 2, **caractérisée en ce que** la fermeture de rinçage de puits (74) est réalisée de manière entraînable par moteur ou en tant que couvercle vissable et dévissable.

4. Centrale électrique à puits selon l'une quelconque des revendications précédentes, **caractérisée en ce que** l'ouverture de rinçage de puits (75) est réalisée en tant que percement (108), en particulier en tant qu'accès de révision au puits (7) lorsque l'ouverture de rinçage de puits (75) est agencée dans la paroi latérale (8).

5. Centrale électrique à puits selon l'une quelconque des revendications 1 à 3, **caractérisée par** un raccord de tuyauterie (109) qui mène directement de l'ouverture de rinçage de puits (75) à l'eau d'aval (6) lorsque l'ouverture de rinçage de puits (75) est agencée dans le fond (9).

6. Centrale électrique à puits selon la revendication 5, **caractérisée par** un raccord de tuyauterie qui mène de l'ouverture de rinçage de puits (75) dans l'évacuation (24).
